(19) Europäisches Patentamt
European Patent Office
Office européen des brevets

(11) EP 4 357 128 A1

(12) EUROPEAN PATENT APPLICATION
published in accordance with Art. 153(4) EPC

(43) Date of publication:
**24.04.2024 Bulletin 2024/17**

(21) Application number: **22825062.7**

(22) Date of filing: **16.06.2022**

(51) International Patent Classification (IPC):
***B32B 17/10** (2006.01)* ***B32B 27/00** (2006.01)*
***B32B 27/30** (2006.01)* ***C03C 27/12** (2006.01)*
***C09J 129/14** (2006.01)* ***C09J 201/00** (2006.01)*
***C09J 7/38** (2018.01)* ***G02B 5/30** (2006.01)*
***G02F 1/13** (2006.01)* ***G02F 1/1335** (2006.01)*

(52) Cooperative Patent Classification (CPC):
**B32B 17/00; B32B 17/10; B32B 27/00; B32B 27/30; C09J 7/38; C09J 129/14; C09J 201/00; G02B 5/30; G02F 1/13; G02F 1/1335**

(86) International application number:
**PCT/JP2022/024191**

(87) International publication number:
**WO 2022/265074 (22.12.2022 Gazette 2022/51)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **18.06.2021 JP 2021102041**
**09.11.2021 JP 2021182886**

(71) Applicant: **SEKISUI CHEMICAL CO., LTD.**
**Osaka-shi**
**Osaka**
**530-8565 (JP)**

(72) Inventors:
- **OOHIGASHI, Yuji**
**Koka-shi, Shiga 528-8585 (JP)**
- **ISHIKAWA, Yuki**
**Mishima-gun, Osaka 618-0021 (JP)**
- **TERAGUCHI, Yumiko**
**Mishima-gun, Osaka 618-0021 (JP)**
- **KAMOSHIDA, Naoki**
**Mishima-gun, Osaka 618-0021 (JP)**
- **OKADA, Yuuki**
**Mishima-gun, Osaka 618-0021 (JP)**
- **URADOKORO, Kanako**
**Mishima-gun, Osaka 618-0021 (JP)**

(74) Representative: **Ter Meer Steinmeister & Partner Patentanwälte mbB**
**Nymphenburger Straße 4**
**80335 München (DE)**

# (54) ADHESIVE FILM, AND LAMINATE

(57) A pressure-sensitive adhesive film which is a pressure-sensitive adhesive film comprising a thermoplastic resin, wherein a maximum peak temperature of tanδ is 0°C or more and 52°C or less, a shear storage elastic modulus at 20°C is 3 × $10^5$ Pa or more, and a proportion of an undissolved component in dissolution of 1.0 g of the pressure-sensitive adhesive film in 10 g of isopropyl alcohol is 35% by mass or more and 100% by mass or less.

EP 4 357 128 A1

## Description

### Technical Field

The present invention relates to a pressure-sensitive adhesive film, and a laminate comprising the pressure-sensitive adhesive film.

### Background Art

Pressure-sensitive adhesive films have been widely used in order to stack and fix surface protection panels, polarization plates, touch sensor-attached films, touch sensor-attached glass, and the like in various displays such as liquid crystal displays, organic EL displays, and touch panel-attached displays. (Meth)acrylic resins have been conventionally widely used in pressure-sensitive adhesive films from the viewpoint of transparency, pressure-sensitive adhesiveness, and/or the like. Use of polyvinyl acetal-based resins has also been studied besides use of (meth)acrylic resins.

With respect to use of polyvinyl acetal-based resins, there is known use of a plasticized polyvinyl acetal-based resin to which a certain amount or more of a plasticizer is compounded, as disclosed in PTLS 1 and 2. There is also studied compounding of a reactive diluent to be cured by light irradiation, in order to enable a plasticized polyvinyl acetal-based resin to be higher in storage elastic modulus by light irradiation.

Plasticized polyvinyl acetal-based resins are widely used also in interlayer films for laminated glass. Such an interlayer film for laminated glass constitutes laminated glass by, for example, bonding two laminated glass members. Laminated glass is widely used in window glass for vehicles such as automobiles, airplanes, buildings, and plants, because of being less likely to cause scattering of glass fragments and being thus safe even if subjected to an external impact and then broken.

Furthermore, there has been recently tried to introduce a light control film to laminated glass constituting window glass or the like, in order to enable light permeability or the like to be adjusted. With respect to introduction of a light control film, there is known, for example, a configuration of laminated glass where a light control film is placed between two glass plates and the light control film and each of the glass plates are bonded with a resin film as an interlayer film for laminated glass being interposed therebetween. There has been studied an application of a pressure-sensitive adhesive film comprising a plasticized polyvinyl acetal-based resin, to a resin film.

### Citation List

#### Patent Literature

PTL 1: JP 6046811 B
PTL 2: JP 6116772 B

### Summary of Invention

#### Technical Problem

Meanwhile, a pressure-sensitive adhesive film and an interlayer film for laminated glass, each comprising the plasticized polyvinyl acetal-based resin used for displays, laminated glass, and the like, have the problem of moisture absorption by a plasticizer or a polyvinyl acetal-based resin and then the occurrence of whitening due to use for a long period under a high temperature and a high humidity.

A conventional (meth)acrylic resin film widely used as a pressure-sensitive adhesive film for liquid crystal displays or the like, while has been high in moisture and heat resistance and hardly has caused the problem of whitening, has had a difficulty in being increased in impact resistance. Therefore, in the case of use in a laminated glass or display application, glass fragments are scattered due to an external impact and then breakage, to lead to deterioration in safety and make use in, for example, a vehicle application difficult.

An object of the present invention is to allow a pressure-sensitive adhesive film comprising a thermoplastic resin to be improved in both impact resistance and moisture and heat resistance.

#### Solution to Problem

The present inventors have made intensive studies, and as a result, have found that the above problems can

be solved by a pressure-sensitive adhesive film comprising a thermoplastic resin, in which the maximum peak temperature of tanδ is within a predetermined temperature range, the shear storage elastic modulus is equal to or more than a certain value, and the proportion of an undissolved component relative to isopropanol is equal to or less than a certain value, and thus have completed the following present invention.

In other words, the present invention provides the following [1] to [31].

[1] A pressure-sensitive adhesive film comprising a thermoplastic resin, wherein
a maximum peak temperature of tanδ is 0°C or more and 52°C or less, a shear storage elastic modulus at 20°C is $3 \times 10^5$ Pa or more, and a proportion of an undissolved component in dissolution of 1.0 g of the pressure-sensitive adhesive film in 10 g of isopropyl alcohol is 35% by mass or more and 100% by mass or less.

[2] The pressure-sensitive adhesive film according to [1], comprising no plasticizer, or comprising less than 20 parts by weight of a plasticizer based on 100 parts by weight of the thermoplastic resin.

[3] The pressure-sensitive adhesive film according to [1] or [2], wherein the thermoplastic resin is a polyvinyl acetal-based resin.

[4] The pressure-sensitive adhesive film according to [3], wherein the polyvinyl acetal-based resin has a polyalkylene oxide structure represented by the following formula (1):

$$*\!-\!\left[A^1O\right]_m\!-\!R^1 \qquad (1)$$

wherein $A^1O$ represents an oxyalkylene group having 2 to 6 carbon atoms, and m represents an average number of repeating and is 4 to 200; $R^1$ represents an alkyl group having 1 to 8 carbon atoms, or a hydrogen atom, in which the oxyalkylene group is optionally adopted singly or as a mixture of two or more kinds thereof; and * represents a position of binding with other group.

[5] The pressure-sensitive adhesive film according to [4], wherein the polyvinyl acetal-based resin contains the polyalkylene oxide structure at a proportion of 0.1% by mol or more and 10% by mol or less.

[6] The pressure-sensitive adhesive film according to [4] or [5], wherein the polyalkylene oxide structure contains at least any of an oxyethylene group and an oxypropylene group.

[7] The pressure-sensitive adhesive film according to [6], wherein the polyalkylene oxide structure contains both an oxyethylene group and an oxypropylene group, and such groups have a random structure.

[8] The pressure-sensitive adhesive film according to any one of [4] to [7], wherein a terminal of the polyalkylene oxide structure is an alkyl group.

[9] The pressure-sensitive adhesive film according to any one of [3] to [8], wherein a degree of acetalization of the polyvinyl acetal-based resin is 60% by mol or more.

[10] The pressure-sensitive adhesive film according to any of [4] to [9], wherein the polyalkylene oxide structure is linked to a main chain via a single bond, or any of an ether bond, an ester bond, an amide bond, and a hydrocarbon group optionally having at least any of these bonds.

[11] The pressure-sensitive adhesive film according to any of [3] to [10], wherein an amount of a hydroxyl group in the polyvinyl acetal-based resin is 5% by mol or more and 35% by mol or less.

[12] The pressure-sensitive adhesive film according to any one of [3] to [11], wherein a degree of acetylationof the polyvinyl acetal-based resin is 0.01% by mol or more and 50% by mol or less.

[13] The pressure-sensitive adhesive film according to any one of [3] to [12], wherein the polyvinyl acetal-based resin is a polyvinyl butyral-based resin.

[14] The pressure-sensitive adhesive film according to any one of [3] to [13], wherein a weight-average molecular weight (Mw) of the polyvinyl acetal-based resin is 50,000 or more and 800,000 or less.

[15] The pressure-sensitive adhesive film according to any one of [3] to [14], where a content of the polyvinyl acetal-based resin is 50% by mass or more and 100% by mass or less based on a total amount of the thermoplastic resin comprised in the pressure-sensitive adhesive film.

[16] The pressure-sensitive adhesive film according to any of [1] to [15], not containing a low-molecular weight compound having a molecular weight of less than 1000 or containing less than 20 parts by mass of the compound based on 100 parts by mass of the thermoplastic resin.

[17] The pressure-sensitive adhesive film according to any of [2] to [16], wherein the plasticizer is at least one selected from the group consisting of an organic ester plasticizer, an organic phosphorus-based plasticizer, an organic ether-based plasticizer, and an alcohol-based plasticizer.

[18] The pressure-sensitive adhesive film according to any one of [1] to [17], wherein the pressure-sensitive adhesive film comprises at least one selected from the group consisting of an ester of glycol and a monobasic organic acid,

an ester compound of a dibasic organic acid having 4 to 12 carbon atoms and an alcohol having 4 to 10 carbon atoms, a polyalkylene glycol-based plasticizer, and a polyoxyalkylene ether-based plasticizer, in the plasticizer.

[19] The pressure-sensitive adhesive film according to any one of [1] to [18], wherein a thickness is 100 μm or more and 2000 μm or less.

[20] A laminate comprising the pressure-sensitive adhesive film according to any one of [1] to [19], and paired base materials, wherein the pressure-sensitive adhesive film is placed between the paired base materials.

[21] The laminate according to [20], wherein each of the paired base materials is glass.

[22] The laminate according to [20], wherein one of the paired base materials is glass and other thereof is any of a light control film and a polarization film.

[23] The laminate according to any one of [20] to [22], wherein the base material constitutes at least one portion of a touch panel, a light control element, and a display element.

[24] The laminate according to any one of [20] to [23], comprising an interlayer member placed between the paired base materials, and an adhesive film placed between each of the base materials and the interlayer member, wherein at least any of such adhesive films is the pressure-sensitive adhesive film.

[25] The laminate according to [24], wherein at least any of an inorganic material substrate and an organic material substrate is placed on a location at which the pressure-sensitive adhesive film on the interlayer member adheres.

[26] The laminate according to [24] or [25], wherein the interlayer member is any of a touch panel and a light control element.

[27] A liquid crystal display comprising the laminate according to any one of [20] to [26].

[28] A laminated glass comprising the laminate according to any one of [20] to [26].

[29] A display comprising the laminate according to any one of [20] to [26].

[30] Use of the pressure-sensitive adhesive film according to any one of [1] to [19], in a display.

[31] Use of the pressure-sensitive adhesive film according to any one of [1] to [19], in laminated glass.

Advantageous Effects of Invention

The present invention enables a pressure-sensitive adhesive film comprising a thermoplastic resin to be improved in both impact resistance and moisture and heat resistance.

Brief Description of Drawings

[Fig. 1] Fig. 1 is a cross-sectional view illustrating a laminate according to a first embodiment.

[Fig. 2] Fig. 2 is a cross-sectional view illustrating a laminate according to a second embodiment.

[Fig. 3] Fig. 3 is a cross-sectional view illustrating a laminate according to a third embodiment.

[Fig. 4] Fig. 4 is a cross-sectional view illustrating a laminate according to a fourth embodiment.

Description of Embodiments

<Pressure-sensitive adhesive film>

The pressure-sensitive adhesive film of the present invention comprises a thermoplastic resin, in which the maximum peak temperature of tanδ is 0°C or more and 52°C or less, the shear storage elastic modulus at 20°C is $3 \times 10^5$ Pa or more, and the proportion of an undissolved component in dissolution of 1.0 g of the pressure-sensitive adhesive film in 10 g of isopropyl alcohol is 35% by mass or more and 100% by mass or less.

The pressure-sensitive adhesive film of the present invention has the foregoing configuration, and thus can be excellent in both impact resistance and moisture and heat resistance.

Hereinafter, a pressure-sensitive adhesive film according to one embodiment of the present invention is described in detail.

[Maximum peak temperature of tanδ]

The maximum peak temperature of tanδ of the pressure-sensitive adhesive film in the present invention is 0°C or more and 52°C or less. When the maximum peak temperature of tanδ is lower than 0°C, impact resistance is not sometimes sufficiently enhanced. Therefore, a laminate obtained by adhesion with the pressure-sensitive adhesive film, when subjected to an impact, is easily broken, and furthermore fragments are easily scattered in such breakage of the laminate. When the maximum peak temperature of tanδ is higher than 52°C, a resin film is insufficient in flexibility and

adhesiveness to various resin materials and inorganic glass cannot be sometimes improved. When the maximum peak temperature of tanδ is lower than 0°C, pressure-sensitive adhesiveness is excessively increased to sometimes deteriorate handleability.

The maximum peak temperature of tanδ of the pressure-sensitive adhesive film is preferably 50°C or less, more preferably 44°C or less, from the above viewpoints. The maximum peak temperature of tanδ is preferably 5°C or more, more preferably 10°C or more, further preferably 20°C or more.

The maximum peak temperature of tanδ of the pressure-sensitive adhesive film can be detected by reading the peak temperature at which the loss tangent tanδ obtained from the viscoelasticity measurement result in viscoelasticity measurement performed with a dynamic viscoelasticity measurement apparatus is a maximum value.

[Shear storage elastic modulus]

The shear storage elastic modulus at 20°C of the pressure-sensitive adhesive film of the present invention is $3 \times 10^5$ Pa or more. When the shear storage elastic modulus is less than $3 \times 10^5$ Pa, impact resistance is deteriorated, and a laminate obtained by adhesion with the pressure-sensitive adhesive film, when subjected to an impact, is easily broken and fragments are easily scattered in such breakage.

The shear storage elastic modulus at 20°C is preferably $1 \times 10^6$ Pa or more, more preferably $5 \times 10^6$ Pa or more, further preferably $1 \times 10^7$ Pa or more, still further preferably $2 \times 10^7$ Pa or more from the viewpoint of impact resistance.

The shear storage elastic modulus at 20°C of the pressure-sensitive adhesive film, while is preferably higher from the viewpoint of impact resistance, is, for example, $5 \times 10^9$ Pa or less, preferably $1 \times 10^9$ Pa or less, further preferably $8 \times 10^8$ Pa or less from the viewpoint of improvements in other physical properties in a well-balanced manner.

[Proportion of undissolved component]

The proportion of an undissolved component in dissolution of 1.0 g of the pressure-sensitive adhesive film of the present invention in 10 g of isopropyl alcohol is 35% by mass or more and 100% by mass or less. When the proportion of the undissolved component is less than 35% by mass, moisture and heat resistance is deteriorated, and the pressure-sensitive adhesive film, when tried to be stored under a high-temperature and high-humidity environment for a long period, is whitened on the periphery portion thereof to lead to the occurrence of appearance failure or the like.

The proportion of the undissolved component is preferably 45% by mass or more, more preferably 50% by mass or more, further preferably 60% by mass or more from the viewpoint of a more enhancement in moisture and heat resistance.

The shear storage elastic modulus, the maximum peak temperature of tanδ, and the proportion of the undissolved component can be adjusted by appropriately selecting the type of a resin, the molecular weight of a resin, the presence of compounding of a plasticizer, the content of a plasticizer, and the like.

[Thermoplastic resin]

Examples of the thermoplastic resin for use in the pressure-sensitive adhesive film include a (meth)acrylic resin, a polyvinyl acetal-based resin, a polyvinyl alcohol-based resin (PVA), a polyurethane-based resin (PU), an ethylene-vinyl acetate copolymer resin (EVA), an ethylene-vinyl acetate copolymer saponified product (EVOH), an ethylene-methacrylic acid copolymer resin, an ionomer resin, an isobutylene resin, a styrene-isoprene copolymer resin, and a styrene-butadiene copolymer resin.

The thermoplastic resin in the pressure-sensitive adhesive film may be used singly or in combinations of two or more kinds.

In particular, a polyvinyl acetal-based resin, a polyurethane-based resin (PU), an ethylene-vinyl acetate copolymer resin (EVA), an ethylene-vinyl acetate copolymer saponified product (EVOH), an ethylene-methacrylic acid copolymer resin, an ionomer resin, an isobutylene resin, a styrene-isoprene copolymer resin, and a styrene-butadiene copolymer resin are preferable from the viewpoint that both moisture and heat resistance and impact resistance are intended to be satisfied. The thermoplastic resin is, in particular, more preferably a polyvinyl acetal-based resin. A polyvinyl acetal-based resin is used to easily result in excellent impact resistance. In addition, adhesive forces to various resin material and inorganic glass are easily improved. Hereinafter, the polyvinyl acetal-based resin for use in the thermoplastic resin is described in detail.

[Polyvinyl acetal-based resin]

The thermoplastic resin is more preferably a polyvinyl acetal-based resin, as described above. The polyvinyl

acetal-based resin may be a modified polyvinyl acetal resin or may be an unmodified polyvinyl acetal resin. The modified polyvinyl acetal resin may have a structure (modified group) other than an acetal group, a hydroxyl group, and an acetyl group, as described below, and preferably has a modified group in a side chain. The modified polyvinyl acetal resin is increased in hydrophobicity by appropriately changing type of the modified group, to easily result in an increase in proportion of the undissolved component.

The polyvinyl acetal-based resin is obtained by acetalizing a polyvinyl alcohol with an aldehyde, and furthermore, if necessary, reacting the resultant with a modifying agent or subjecting the resultant to a re-acetylation treatment. The modified polyvinyl acetal resin may also be obtained by using a modified polyvinyl alcohol as a polyvinyl alcohol serving as a raw material.

The structure other than an acetal group, a hydroxyl group, and an acetyl group is preferably a polyalkylene oxide structure. In the present invention, when the polyalkylene oxide structure is contained, hydrophobicity is increased and the proportion of the undissolved component is increased, and moisture and heat resistance is easily enhanced. In addition, impact resistance, adhesiveness to a resin material, and the like are also easily improved. The polyalkylene oxide structure is specifically as represented by the following formula (1).

$$* \!-\!\left[ A^1O \right]_m\!-\! R^1 \qquad (1)$$

wherein $A^1O$ represents an oxyalkylene group having 2 to 6 carbon atoms, and m represents an average number of repeating and is 4 to 200; $R^1$ represents an alkyl group having 1 to 8 carbon atoms, or a hydrogen atom, in which the oxyalkylene group is optionally adopted singly or as a mixture of two or more kinds thereof; and * represents a position of binding with other group.

The oxyalkylene group in $A^1O$ is an oxyalkylene group having 2 to 6 carbon atoms, preferably an oxyalkylene group having 2 to 4 carbon atoms, more preferably an oxyalkylene group having 2 to 3 carbon atoms. When the number of carbon atoms in the oxyalkylene group is within the above range, the proportion of the undissolved component is increased, and moisture and heat resistance is easily enhanced. In addition, impact resistance, adhesiveness to a resin material, and the like are also easily improved.

The alkylene group in the oxyalkylene group may be straight or may have a branched structure. Examples of the oxyalkylene group include an oxyethylene group, an oxypropylene group, or an oxybutylene group, and an oxyethylene group or an oxypropylene group is preferable. The oxyalkylene group may be used singly or in combinations of two or more kinds thereof. In a case where two or more kinds of such oxyalkylene groups are used in combination, such each oxyalkylene group may be added in a random or block form, and is preferably added in a random form.

The oxyalkylene group in the polyalkylene oxide structure preferably contains at least any of an oxyethylene group and an oxypropylene group, or also preferably contains both an oxyethylene group and an oxypropylene group. In a case where both an oxyethylene group and an oxypropylene group are contained, these groups may constitute a block structure and more preferably constitute a random structure.

In a case where an oxyethylene group (EO) and an oxypropylene group (PO) are contained, the ratio of the oxypropylene group to the oxyethylene group (PO/EO), in terms of molar ratio, is, for example, 1/9 or more and 9/1 or less, preferably 2/8 or more and 8/2 or less, more preferably 3/7 or more and 7/3 or less.

In the formula (1), m represents the average number of repeating of such oxyalkylene groups, is 4 to 200, preferably 5 to 100, more preferably 10 to 80, further preferably 15 to 50.

The alkyl group in $R^1$ may be straight, or may have a branched structure.

Examples of the alkyl group in $R^1$ include a methyl group, an ethyl group, a n-propyl group, an isopropyl group, a n-butyl group, branched butyl groups such as a s-butyl and a t-butyl group, a n-pentyl group, branched pentyl groups, a n-hexyl group, branched hexyl groups, a n-heptyl group, branched heptyl groups such as an isoheptyl group and a 3-heptyl group, a n-octyl group, and branched octyl groups such as an isooctyl group and a 2-ethylhexyl group.

$R^1$ may represent any of an alkyl group and a hydrogen atom, and preferably represents an alkyl group. Accordingly, the polyalkylene oxide structure preferably has an alkyl group at a terminal. When the polyalkylene oxide structure has an alkyl group at a terminal, hydrophobicity is increased and moisture and heat resistance of the pressure-sensitive adhesive film is more easily enhanced. The number of carbon atoms in the alkyl group may be 1 to 8 as described above, and is preferably 1 to 6, more preferably 1 to 4.

The polyalkylene oxide structure may be linked to a main chain via a single bond, and is preferably linked to a main chain via a linking group other than a single bond.

Examples of the linking group other than a single bond include an ether bond (-O-), an ester bond (-COO-), an amide bond (-CONR-: R represents a hydrogen atom or an alkyl group having 1 to 4 carbon atoms, preferably a hydrogen atom), or a hydrocarbon group optionally having at least any of these bonds. In particular, an ether bond (-O-), an ester

bond (-COO-), or a hydrocarbon group optionally having at least any of these bonds is more preferable. The number of carbon atoms in the hydrocarbon group is not particularly limited, may be, for example, about 1 to 10, and is preferably 1 to 4. In particular, the polyalkylene oxide structure is more preferably bound to a main chain via any of an ether bond or $-CH_2O-$. The polyalkylene oxide structure, when bound to a main chain via any thereof, thus is easily produced. Here, an oxygen atom in $-CH_2O-$ may be bound to the polyalkylene oxide structure.

The polyvinyl acetal-based resin typically has an acetal group, a hydroxyl group, and an acetyl group. It is noted that the polyvinyl acetal-based resin may be modified by a functional group or subjected to re-acetylation reaction to contain no hydroxyl group. Here, such acetal group, hydroxyl group, and acetyl group are each a group bound to a main chain directly or via an oxygen atom, as represented by formula (3-1) to formula (3-3) described below, and do not encompass any hydroxyl group contained in the polyalkylene oxide structure.

The polyvinyl acetal-based resin is preferably modified to have the polyalkylene oxide structure represented by the formula (1), as described above. Hereinafter, the polyvinyl acetal-based resin, which has the polyalkylene oxide structure, may be described as a modified polyvinyl acetal resin (A) so as to be described with being distinguished from other polyvinyl acetal-based resin.

The amount of modification of the modified polyvinyl acetal resin (A) by the polyalkylene oxide structure (namely, the functional group represented by the formula (1)) is preferably 0.1% by mol or more and 10% by mol or less. By the amount of modification within the above range, not only the maximum peak temperature of tan$\delta$ is an appropriate temperature, but also the shear storage elastic modulus at 20°C is easily increased and impact resistance is easily enhanced. In addition, adhesive forces to various resin materials are easily enhanced. When the amount of modification is equal to or more than the lower limit value, the proportion of the undissolved component is increased, and moisture and heat resistance is easily improved.

The amount of modification by the polyalkylene oxide structure is preferably 0.2% by mol or more, more preferably 0.3% by mol or more, further preferably 0.4% by mol or more, particularly preferably 0.5% by mol or more, and preferably 8% by mol or less, more preferably 6% by mol or less, further preferably 4% by mol or less from these viewpoints.

The amount of modification by the functional group represents the proportion of the functional group relative to the total vinyl monomer unit constituting the polyvinyl acetal-based resin. The amount of modification can be calculated from a spectrum obtained by subjecting the polyvinyl acetal-based resin to proton NMR measurement. The degree of acetalization, the amount of a hydroxyl group, and the degree of acetylation, described below, can also be each calculated from a spectrum obtained by proton NMR measurement performed.

The polyvinyl acetal-based resin does not optionally have the polyalkylene oxide structure. Such a polyvinyl acetal-based resin may be a modified polyvinyl acetal resin having a modified group other than the functional group represented by the formula (1), or may be an unmodified polyvinyl acetal resin. Even such an unmodified polyvinyl acetal resin allows impact resistance to be easily increased, by decreasing the amount of a hydroxyl group, as described below, due to re-acetylation reaction or the like and decreasing the maximum peak temperature of tan$\delta$.

Examples of the modified group other than the functional group represented by the formula (1) include an alkyl group. The alkyl group may be straight or may have a branched structure. The number of carbon atoms in the alkyl group is, for example, 2 to 30, preferably 3 to 24, more preferably 5 to 20, further preferably 7 to 18, still further preferably 11 to 18. The alkyl group may be directly bound to a main chain, preferably a constituent unit derived from a vinyl group constituting a main chain, and is preferably bound via an ether bond (-O-), a ester bond (*-COO-**), or a urethane bond (*-NHCOO-**), more preferably bound via an ester bond or a urethane bond.

Herein, "*" and "**" in the ester bond and the urethane bond each represent a position of binding to the alkyl group or the main chain, and, preferably, "*" represents a position of binding to the alkyl group and "**" represents a position of binding to the main chain in the respective bonds.

The polyvinyl acetal-based resin may have a constituent unit derived from a vinyl group, as the main chain, and the functional group represented by the formula (1) may be bound to a constituent unit derived from a vinyl group constituting the main chain. Accordingly, the polyvinyl acetal-based resin preferably has a constituent unit represented by the following formula (2), and in particular, more preferably has any constituent unit represented by the following formula (2-1) and formula (2-2).

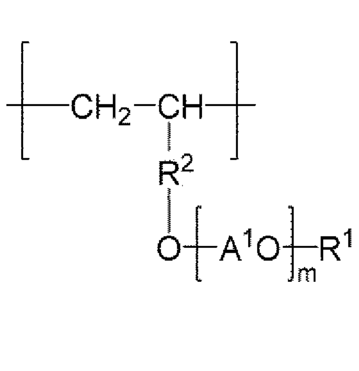

(2)

wherein $A^1O$, $R^1$, and m are the same as described above; and $R^2$ represents any of a single bond, or a hydrocarbon group optionally having at least any of an ester bond or an ether bond.

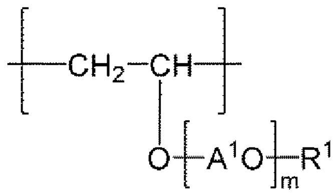

(2-1)

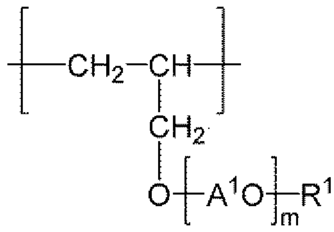

(2-2)

wherein $A^1O$, $R^1$, and m are the same as described above.

Since $A^1O$, $R^1$, and m in the formulae (2), (2-1), and (2-2) are as described above, the description thereof is omitted. The number of carbon atoms in $R^2$ in the formula (2) is, for example, 1 to 10, preferably 1 to 4. The hydrocarbon group in $R^2$ optionally has an ester bond or an ether bond as described above, and preferably has neither an ester bond nor an ether bond.

The polyvinyl acetal-based resin typically has an acetal group, a hydroxyl group, and an acetyl group, namely, the polyvinyl acetal-based resin typically has constituent units represented by the following formula (3-1), formula (3-2) and formula (3-3). Accordingly, the modified polyvinyl acetal resin preferably has constituent units represented by the following formula (3-1), formula (3-2) and formula (3-3), and the constituent unit represented by the formula (2).

It is noted that the polyvinyl acetal-based resin, when is, for example, an unmodified polyvinyl acetal resin, has no hydroxyl group as described above and has optionally no constituent unit represented by the formula (3-2). In other words, the unmodified polyvinyl acetal resin has constituent units represented by the following formula (3-1) and formula (3-3), and may optionally further have a constituent unit represented by the following formula (3-2).

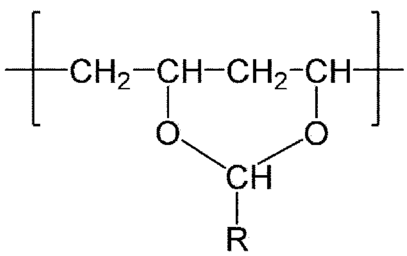

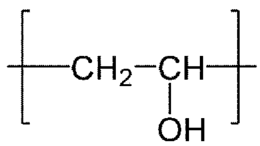

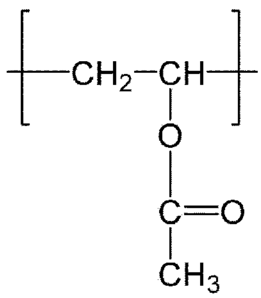

(3-1) (3-2) (3-3)

wherein R in the formula (3-1) represents a hydrogen atom or a hydrocarbon group having 1 to 19 carbon atoms.

The polyvinyl acetal-based resin is obtained by acetalizing a polyvinyl alcohol or a modified polyvinyl alcohol obtained by modification of a polyvinyl alcohol, with an aldehyde, and then, if necessary, modifying the resultant, as described above, and the polyvinyl alcohol here used is generally a polyvinyl alcohol having a degree of saponification of 80 to 99.8% by mol.

The number of carbon atoms in an acetal group contained in the polyvinyl acetal-based resin is not particularly limited, and is, for example, 1 to 20, preferably 2 to 10, more preferably 2 to 6, further preferably 2, 3 or 4, as represented by the formula (3-1). Accordingly, the number of carbon atoms in R represented by the formula (3-1) is preferably 1 to 9, more preferably 1 to 5, further preferably 1 to 3.

The acetal group is specifically particularly preferably a butyral group, and therefore the polyvinyl acetal-based resin is preferably a polyvinyl butyral-based resin. The degree of acetalization (namely, amount of acetal) of the polyvinyl acetal-based resin is, for example, 40% by mol or more and 90% by mol or less. The degree of acetalization is preferably 60% by mol or more, more preferably 63% by mol or more, further preferably 65% by mol or more. When the degree of acetalization is increased, the proportion of the undissolved component is increased and moisture and heat resistance is easily enhanced.

The degree of acetalization is more preferably 88% by mol or less, further preferably 85% by mol or less. When the degree of acetalization is within such a range, not only the amount of a hydroxyl group is a proper amount, but also the functional group represented by the formula (1) is easily contained in a certain amount.

The degree of acetalization means the degree of acetoacetalization in a case where an acetal group of the polyvinyl acetal-based resin is an acetoacetal group and means the degree of butyralization in a case where the acetal group is a butyral group.

The degree of acetalization represents the proportion of a vinyl alcohol unit acetalized relative to the total vinyl monomer unit constituting the polyvinyl acetal-based resin.

The amount of a hydroxyl group in the polyvinyl acetal-based resin is preferably 35% by mol or less, more preferably 33% by mol or less, further preferably 30% by mol or less, still further preferably 25% by mol or less. When the amount of a hydroxyl group is equal to or less than the upper limit value, the maximum peak temperature of tan$\delta$ is easily a suitable value and furthermore the adhesive force to a resin material having low polarity, for example, polycarbonate is easily increased. Furthermore, the proportion of the undissolved content is easily increased.

The amount of a hydroxyl group in the polyvinyl acetal-based resin may be 0% by mol or more, and in the case of the modified polyvinyl acetal resin (A), the amount of a hydroxyl group may be a certain amount and is, for example, 5% by mol or more, preferably 9% by mol or more, more preferably 10% by mol or more, further preferably 12% by mol or more, from the viewpoint of preventing the pressure-sensitive adhesive film from being too flexible.

In a case where the polyvinyl acetal-based resin is, for example, an unmodified polyvinyl acetal resin, the amount of a hydroxyl group is needed to be low in order to decrease the maximum peak temperature of tan$\delta$ and increase the adhesive force to a resin having low polarity, for example, polycarbonate. Therefore, the amount of a hydroxyl group in the unmodified polyvinyl acetal resin is preferably 15% by mol or less, more preferably 10% by mol or less, further preferably 5% by mol or less, still further preferably 3% by mol or less, most preferably 0% by mol.

The amount of a hydroxyl group represents the proportion of a hydroxyl group relative to the total vinyl monomer unit constituting the polyvinyl acetal-based resin.

The degree of acetylation (amount of acetyl group) of the polyvinyl acetal-based resin is, for example, 0.01% by mol or more and 50% by mol or less, and in the case of the modified polyvinyl acetal resin (A), the degree of acetylation is also favorably equal to or less than a certain value so that the amount of modification by the functional group represented by the formula (1) is equal to or more than a certain value. Accordingly, the degree of acetylation of the modified polyvinyl acetal resin (A) is preferably 20% by mol or less, more preferably 15% by mol or less, further preferably 12% by mol or less, still further preferably 5% by mol or less.

The degree of acetylation of the modified polyvinyl acetal resin (A) is, for example, 0.01% by mol or more, as described above, and is preferably 0.1% by mol or more, more preferably 0.3% by mol or more.

In the case of the unmodified polyvinyl acetal resin, the degree of acetylation is favorably equal to or more than a certain value, and is preferably 15% by mol or more, more preferably 25% by mol or more, further preferably 30% by mol or more from the viewpoint of a decrease in amount of a hydroxyl group and a decrease in maximum peak temperature of tan$\delta$ and increases in impact resistance, in proportion of the undissolved content, and in adhesive force to various resin materials. The degree of acetylation of the unmodified polyvinyl acetal resin is, for example, 50% by mol or less as described above, and is preferably 45% by mol or less, further preferably 42% by mol or less.

The degree of acetylation represents the proportion of an acetyl group relative to the total vinyl monomer unit constituting the polyvinyl acetal-based resin.

The weight-average molecular weight (Mw) of the polyvinyl acetal-based resin is preferably 50,000 or more and 800,000 or less. When the weight-average molecular weight is adjusted within the above range, the shear storage elastic modulus, the maximum peak temperature of tan$\delta$, and the like are allowed to be within desired ranges and impact resistance, adhesiveness and the like are easily improved. When the weight-average molecular weight is equal to or more than the lower limit value, the proportion of the undissolved component is easily increased. The weight-average molecular weight (Mw) of the polyvinyl acetal-based resin is more preferably 100,000 or more, further preferably 120,000 or more, still further preferably 150,000 or more from these viewpoints. The weight-average molecular weight (Mw) is more preferably 600,000 or less, further preferably 500,000 or less, still further preferably 400,000 or less.

The weight-average molecular weight (Mw) is measured by gel permeation chromatography.

The aldehyde for use in the production of the polyvinyl acetal-based resin is not particularly limited, and is, for example, an aldehyde having 1 to 20 carbon atoms, and in general, an aldehyde having 2 to 10 carbon atoms is suitably used. The aldehyde having 2 to 10 carbon atoms is not particularly limited, and examples thereof include acetaldehyde, propionaldehyde, n-butylaldehyde, isobutylaldehyde, n-valeraldehyde, 2-ethylbutylaldehyde, n-hexylaldehyde, n-octylaldehyde, n-nonylaldehyde, n-decylaldehyde, and benzaldehyde. In particular, an aldehyde having 2 to 6 carbon atoms, such as acetaldehyde, n-butylaldehyde, n-hexylaldehyde, or n-valeraldehyde is preferable, an aldehyde having 2, 3, or 4 carbon atoms is more preferable, and n-butylaldehyde is further preferable. Such an aldehyde may be used singly or in combinations of two or more kinds thereof.

The polyvinyl acetal-based resin for use in the present invention may be used singly or in combinations of two or more kinds thereof.

In a case where the polyvinyl acetal-based resin is used as the thermoplastic resin in the pressure-sensitive adhesive film of the present invention, the pressure-sensitive adhesive film may comprise a thermoplastic resin other than the polyvinyl acetal-based resin as long as the effects of the present invention are exerted. Here, the polyvinyl acetal-based resin is preferably a main component. The thermoplastic resin other than the polyvinyl acetal-based resin is as described above.

Specifically, the content of the polyvinyl acetal-based resin is, for example, 50% by mass or more, preferably 70% by mass or more, more preferably 90% by mass or more, most preferably 100% by mass based on the total amount of the thermoplastic resin comprised in the pressure-sensitive adhesive film. Accordingly, the thermoplastic resin comprised in the pressure-sensitive adhesive film of the present invention may be one being composed of only the polyvinyl acetal-based resin.

(Plasticizer)

The pressure-sensitive adhesive film of the present invention may comprise a plasticizer. The pressure-sensitive adhesive film can comprise a plasticizer and can be flexible, thereby allowing maximum peak temperature of tan6 of the pressure-sensitive adhesive film to be decreased and adhesiveness to various resin materials such as polycarbonate and various adherends such as inorganic glass to be improved. Herein, the pressure-sensitive adhesive film of the present invention preferably comprises no plasticizer, or even if comprising a plasticizer, preferably comprises a small amount of a plasticizer. When the pressure-sensitive adhesive film comprises only a small amount of a plasticizer, or comprises no plasticizer, the proportion of the undissolved component is prevented from being decreased and moisture and heat resistance are easily improved.

Even when the pressure-sensitive adhesive film of the present invention comprises a small amount of a plasticizer or comprises no plasticizer, the above predetermined thermoplastic resin can be used to allow for an improvement in adhesiveness to various resin materials such as polycarbonate.

The content of the plasticizer in the pressure-sensitive adhesive film is favorably less than 20 parts by mass based on 100 parts by mass of the thermoplastic resin comprised in the pressure-sensitive adhesive film. When the content of the plasticizer is less than 20 parts by mass, the proportion of the undissolved component is easily increased and moisture and heat resistance are also improved.

The content of the plasticizer is preferably 15 parts by mass or less, more preferably 10 parts by mass or less, further preferably 5 parts by mass or less, still further preferably 1 part by mass or less from the viewpoint of moisture and heat resistance. The lower limit of the content of the plasticizer is 0 parts by mass.

The resin composition in the present invention optionally comprises no plasticizer in the case of use of the modified polyvinyl acetal resin (A), and comprising a plasticizer easily enhances adhesiveness of a resin film. On the other hand, the resin composition favorably comprises a plasticizer from the viewpoint of an enhancement in adhesiveness of a resin film, in the case of use of the unmodified polyvinyl acetal resin.

Examples of the plasticizer include organic ester plasticizers, organic phosphorus-based plasticizers such as an organic phosphoric acid ester plasticizer and an organic phosphorous acid ester plasticizer. Examples of the plasticizer also include organic ether-based plasticizers such as a polyalkylene glycol-based plasticizer and a polyoxyalkylene ether-based plasticizer, and alcohol-based plasticizers.

The plasticizer may be used singly or in combinations of two or more kinds thereof. In particular, an organic ester plasticizer is preferable. Preferred examples of such an organic ester plasticizer include monobasic organic acid ester and polybasic organic acid ester.

Examples of the monobasic organic acid ester include ester of glycol and a monobasic organic acid. Examples of the glycol include a polyalkylene glycol where each alkylene unit has 2 to 4 carbon atoms, preferably 2 or 3 carbon atoms, and the number of such alkylene units repeated is 2 to 10, preferably 2 to 4. The glycol may also be a monoalkylene glycol (namely, the number of repeating unit is 1) having 2 to 4 carbon atoms, preferably 2 or 3 carbon atoms.

Specific examples of the glycol include ethylene glycol, diethylene glycol, triethylene glycol, tetraethylene glycol,

propylene glycol, dipropylene glycol, tripropylene glycol, tetrapropylene glycol, and butylene glycol.

Examples of the monobasic organic acid include an organic acid having 3 to 10 carbon atoms, and specifically include butyric acid, isobutyric acid, caproic acid, 2-ethylbutyric acid, heptylic acid, n-octylic acid, 2-ethylhexylic acid, n-nonylic acid and decylic acid.

Specific examples of the monobasic organic acid include triethylene glycol di-2-ethyl butyrate, triethylene glycol di-2-ethyl hexanoate, triethylene glycol dicaprylate, triethylene glycol di-n-octanoate, triethylene glycol di-n-heptanoate, tetraethylene glycol di-n-heptanoate, tetraethylene glycol di-2-ethyl hexanoate, diethylene glycol di-2-ethyl butyrate, diethylene glycol di-2-ethyl hexanoate, dipropylene glycol di-2-ethyl butyrate, triethylene glycol di-2-ethyl pentanoate, tetraethylene glycol di-2-ethyl butyrate, diethylene glycol dicaprylate, triethylene glycol di-n-heptanoate, tetraethylene glycol di-n-heptanoate, triethylene glycol di-2-ethyl butyrate, ethylene glycol di-2-ethyl butyrate, 1,2-propylene glycol di-2-ethyl butyrate, 1,3-propylene glycol di-2-ethyl butyrate, 1,4-butylene glycol di-2-ethyl butyrate, and 1,2-butylene glycol di-2-ethyl butyrate.

Examples of the polybasic organic acid ester include an ester compound of a dibasic organic acid having 4 to 12 carbon atoms, such as adipic acid, sebacic acid or azelaic acid, and an alcohol having 4 to 10 carbon atoms. The alcohol having 4 to 10 carbon atoms may be straight, may have a branched structure, or may have a cyclic structure.

Specific examples include dibutyl sebacate, dioctyl azelate, dihexyl adipate, dioctyl adipate, hexylcyclohexyl adipate, diisononyl adipate, heptylnonyl adipate, dibutylcarbitol adipate, and a mixed adipic acid ester. For example, an oil-modified sebacic acid alkyd may also be adopted. Examples of the mixed adipic acid ester include an adipate produced from two or more alcohols selected from an alkyl alcohol having 4 to 9 carbon atoms and a cyclic alcohol having 4 to 9 carbon atoms.

Examples of the organic phosphorus-based plasticizer include phosphoric acid esters such as tributoxyethyl phosphate, isodecylphenyl phosphate and triisopropyl phosphate.

The organic ester plasticizer is not limited to any complete ester of each of the above esters, and may be a partial ester thereof. For example, the organic ester plasticizer may be a partial ester of glycol and a monobasic organic acid, or a partial ester of a dibasic organic acid and an alcohol. Specific examples include triethylene glycol-mono-2-ethyl hexanoate.

The organic ester plasticizer may also be a partial ester of a tri- or higher-hydric alcohol such as glycerin and a monobasic organic acid. Examples of such a monobasic organic acid include a monobasic organic acid having 3 to 24 carbon atoms, preferably 6 to 18 carbon atoms. Specific examples of the partial ester of a tri- or higher-hydric alcohol and such a monobasic organic acid include a mono- or di-ester of glycerin and stearic acid, and a mono- or di-ester of glycerin and 2-ethylhexylic acid.

In particular, triethylene glycol di(2-ethylhexanoate) (3GO) is particularly suitably used as the organic ester plasticizer.

Examples of the polyalkylene glycol-based plasticizer include polyethylene glycol, polypropylene glycol, a poly(ethylene oxide/propylene oxide) block copolymer, a polyethylene oxide/propylene oxide) random copolymer, and polytetramethylene glycol, and in particular, polypropylene glycol is preferable.

The polyoxyalkylene ether-based plasticizer is an ether compound of a monohydric or polyhydric alcohol and polyoxyalkylene.

Specific examples of the polyoxyalkylene ether-based plasticizer include polyoxyethylene hexyl ether, polyoxyethylene heptyl ether, polyoxyethylene octyl ether, polyoxyethylene-2-ethylhexyl ether, polyoxyethylene nonyl ether, polyoxyethylene decyl ether, polyoxyethylene allyl ether, polyoxypropylene allyl ether, polyoxyethylene glyceryl ether, polyoxypropylene glyceryl ether, polyoxyethylene diglyceryl ether, polyoxypropylene diglyceryl ether, and polyoxyalkylene pentaerythritol ether.

The polyoxyalkylene ether-based plasticizer is preferably an ether compound of a polyhydric alcohol and polyoxyalkylene, more preferably an ether compound of glycerin or diglycerin and polyoxyalkylene, further preferably an ether compound of glycerin or diglycerin and polyoxypropylene.

Examples of the alcohol-based plasticizer include various polyhydric alcohols such as butanediol, hexanediol, trimethylolpropane, and pentaerythritol. In particular, trimethylolpropane is preferable.

The pressure-sensitive adhesive film may appropriately comprise a known additive to be used in combination with the thermoplastic resin, besides the plasticizer. In other words, the pressure-sensitive adhesive film may be one being composed of the thermoplastic resin, for example, the polyvinyl acetal-based resin, and may comprise the plasticizer, if necessary, compounded, or an additive other than the plasticizer, in addition to the thermoplastic resin.

Specific examples of the additive other than the plasticizer include an ultraviolet absorber, an infrared absorber, an antioxidant, a light stabilizer, an adhesive force modifier, a pigment, a dye, a fluorescent whitener, and a crystal nucleator. The resin composition in the present invention may be diluted with a solvent and then used in the form of a diluted liquid.

The pressure-sensitive adhesive film preferably comprises no low-molecular weight compound, or even if comprising a low-molecular weight compound, preferably comprises a small amount of a low-molecular weight compound.

When the pressure-sensitive adhesive film comprises only a small amount of a low-molecular weight compound or comprises no low-molecular weight compound, moisture and heat resistance is prevented from being deteriorated due to a decrease in proportion of the undissolved component.

The low-molecular weight compound refers to a compound having a molecular weight of less than 1000, and examples thereof include the above plasticizer, and a reactive diluent to be cured by light irradiation. Examples of the reactive diluent include (meth)acrylic-based reactive diluents such as a (meth)acrylic-based monomer and a (meth)acrylic oligomer, epoxy-based reactive diluents such as an epoxy monomer and an epoxy oligomer, and silicone-based reactive diluents such as an alkoxysilane monomer and an alkoxysilane oligomer.

The content of the low-molecular weight compound in the pressure-sensitive adhesive film is, for example, less than 20 parts by mass based on 100 parts by mass of the thermoplastic resin comprised in the pressure-sensitive adhesive film. The content of the low-molecular weight compound is lowered to result in an increase in proportion of the undissolved component and an easy enhancement in moisture and heat resistance. The content of the low-molecular weight compound is preferably 15 parts by mass or less, more preferably 10 parts by mass or less, further preferably 5 parts by mass or less, still further preferably 1 part by mass or less from the viewpoint of moisture and heat resistance. The lower limit of the content of the low-molecular weight compound is 0 parts by mass.

[Method for producing polyvinyl acetal-based resin]

The polyvinyl acetal-based resin for use in the pressure-sensitive adhesive film of the present invention is obtained by acetalizing a polyvinyl alcohol (also referred to as "raw material polyvinyl alcohol") with an aldehyde, and then, if necessary, reacting the resultant with a modifying agent or subjecting the resultant to a re-acetylation treatment. The raw material polyvinyl alcohol may be an unmodified polyvinyl alcohol, or the raw material polyvinyl alcohol may be a modified polyvinyl alcohol in a case where the modified polyvinyl acetal resin is obtained.

For example, a modified polyvinyl acetal resin (A) having a polyalkylene oxide structure, when produced, is preferably produced by the following production method (1).

(Production method (1))

In the present production method (1), first, a polyoxyalkylene-modified polyvinyl alcohol is produced as the raw material polyvinyl alcohol. Specifically, the polyoxyalkylene-modified polyvinyl alcohol is obtained by polymerizing a monomer comprising a vinyl ester and a vinyl monomer having a polyoxyalkylene group to obtain a polymer, and then saponifying the polymer. An alkali or an acid is generally used in saponification, and an alkali is preferably used. The polyoxyalkylene-modified polyvinyl alcohol may be used singly or in combinations of two or more kinds thereof.

Next, the polyoxyalkylene-modified polyvinyl alcohol obtained above may be acetalized with an aldehyde to obtain the modified polyvinyl acetal resin (A). The acetalization method here performed may be a known method.

The vinyl ester for use in the production method (1) can be, for example, vinyl acetate, vinyl formate, vinyl propionate, vinyl butyrate, vinyl isobutyrate, vinyl pivalate, vinyl versatate, vinyl caproate, vinyl caprylate, vinyl laurate, vinyl palmitate, vinyl stearate, vinyl oleate, or vinyl benzoate. In particular, vinyl acetate is preferable.

Specific examples of the vinyl monomer having a polyoxyalkylene group, for use in the production method (1), include a compound represented by the following formula (4). In particular, a polyoxyalkylene vinyl ether represented by the following formula (4-1) and a polyoxyalkylene allyl ether represented by the following formula (4-2) are preferable.

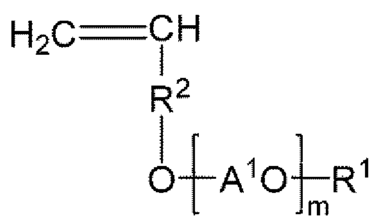

(4)

wherein $A^1O$, $R^1$, $R^2$, and m are the same as described above.

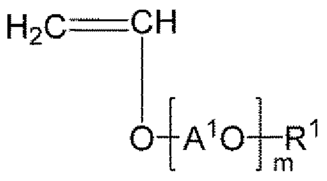

(4-1)

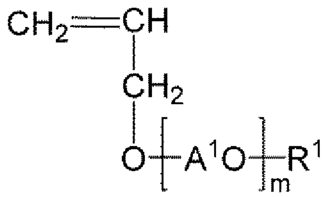

(4-2)

wherein $A^1O$, m, and $R^1$ are each the same as described above.

Preferred examples of the vinyl monomer having a polyoxyalkylene group include polyoxyethylene monovinyl ether, polyoxyethylene polyoxypropylene monovinyl ether, polyoxypropylene monovinyl ether, polyoxyethylene monoallyl ether, polyoxyethylene polyoxypropylene monoallyl ether, polyoxypropylene monoallyl ether, polyoxyethylene alkyl vinyl ether, polyoxyethylene polyoxypropylene alkyl vinyl ether, polyoxypropylene alkyl vinyl ether, polyoxyethylene alkyl allyl ether, polyoxyethylene polyoxypropylene alkyl allyl ether, and polyoxypropylene alkyl allyl ether.

The unmodified polyvinyl acetal resin is preferably produced by the following production method (2).

(Production method (2))

In the present production method (2), the raw material polyvinyl alcohol is acetalized with an aldehyde to obtain a polyvinyl acetal-based resin (hereinafter, also referred to as "raw material polyvinyl acetal-based resin"). The raw material polyvinyl alcohol here used is an unmodified polyvinyl alcohol obtained by saponifying a polyvinyl ester. Next, the raw material polyvinyl acetal-based resin may be subjected to a re-acetylation treatment to obtain the unmodified polyvinyl acetal resin. The re-acetylation treatment may be performed by a conventionally known method, or may be performed with acetic anhydride in the presence of a base such as pyridine. The re-acetylation treatment may be performed by heating to, for example, about 50°C or more and 100°C or less, preferably about 70°C or more and 90°C or less. By subjecting to the re-acetylation treatment, the polyvinyl acetal-based resin is decreased in amount of a hydroxyl group, easily decreased in maximum peak temperature of tanδ, and improved in adhesiveness to various resin materials such as polycarbonate.

The modified polyvinyl acetal resin, which has an alkyl group in a side chain, may be produced, for example, by the following production method.

First, the raw material polyvinyl alcohol is acetalized with an aldehyde to obtain a polyvinyl acetal-based resin (hereinafter, also referred to as "raw material polyvinyl acetal-based resin"). The raw material polyvinyl alcohol here used is obtained by saponifying a polyvinyl ester, and is preferably an unmodified polyvinyl alcohol.

Next, the raw material polyvinyl acetal-based resin is reacted with a modifying agent having an alkyl group to introduce the alkyl group to the raw material polyvinyl acetal-based resin. The modifying agent may be a compound having a reactive group which is to be reacted with a hydroxyl group contained in the raw material polyvinyl acetal-based resin to form a urethane bond or an ester bond. Specific examples include an alkyl isocyanate whose alkyl group has 2 to 30 carbon atoms, such as n-octadecyl isocyanate. Examples also include a carboxylic acid having 3 to 31 carbon atoms, or an anhydride of the carboxylic acid, and carboxylic acid derivatives such as carboxylic acid ester and carboxylic acid halide. Such a carboxylic acid derivative is preferably carboxylic acid chloride such as 2-ethylhexanoyl chloride, lauroyl chloride, myristyl chloride, palmitoyl chloride, or stearoyl chloride.

The pressure-sensitive adhesive film of the present invention widely refers to not only one as a single pressure-sensitive adhesive film, but also one which is laminated or applied on other member and is in the form of a layer or film, and one having a relatively large thickness, generally called sheet, is also referred to as "pressure-sensitive adhesive film". The thickness of the pressure-sensitive adhesive film is not particularly limited, and is, for example, 100 μm or more and 2000 μm or less, preferably 100 μm or more and 1000 μm or less. The thickness of the pressure-sensitive adhesive film is preferably higher and higher for an increase in impact resistance of the pressure-sensitive adhesive film, and is more preferably 200 μm or more, further preferably 300 μm or more. The thickness of the pressure-sensitive adhesive film is more preferably 500 μm or less from the viewpoint of thinning.

The pressure-sensitive adhesive film of the present invention may be composed of a single layer. The layer constituting such a single-layer film may have a composition as described with respect to the pressure-sensitive adhesive film. In other words, the layer constituting such a single-layer film may comprise a thermoplastic resin and comprise no plasticizer, or may comprise a plasticizer at any content as described above. An additive may be further appropriately compounded as described above.

The pressure-sensitive adhesive film of the present invention may be a multi-layer film of two or more layers. The multi-layer film may have a composition as described with respect to the pressure-sensitive adhesive film, as the

composition of the entire film, and each layer (hereinafter, also referred to as " first layer") may have a composition as described with respect to the pressure-sensitive adhesive film. In other words, each first layer may comprise a thermoplastic resin and comprises no plasticizer or may comprise a plasticizer at any content as described above, as described with respect to the pressure-sensitive adhesive film. Furthermore, an additive may also be appropriately compounded as described above. The details of the thermoplastic resin, the plasticizer, and the additive, and the detail of the content of such each component, in each first layer of the multi-layer film are as described with respect to the pressure-sensitive adhesive film. Herein, the thermoplastic resin serving as the reference of the content is the thermoplastic resin comprised in each first layer. Each first layer in the multi-layer film may be the same in composition or may be different in composition.

The multi-layer film may also be a laminate of the above first layer and a layer other than the first layer (hereinafter, also referred to as "second layer"). Specific examples include a three-layer structure of first layer/second layer/first layer.

In a case where the pressure-sensitive adhesive film of the present invention is a multi-layer film of two or more layers, each layer preferably has a composition described with respect to the pressure-sensitive adhesive film.

[Method for producing pressure-sensitive adhesive film]

The pressure-sensitive adhesive film of the present invention can be produced by forming a resin composition comprising a thermoplastic resin such as a polyvinyl acetal-based resin, into a film, by a known method. The resin composition comprises at least a thermoplastic resin such as a polyvinyl acetal-based resin, produced as described above, and may be prepared by adding, if necessary, a plasticizer, an additive, and/or the like. The resin composition may be appropriately diluted with a solvent and then used.

More specifically, the pressure-sensitive adhesive film, which is of a single layer, may be formed as a film by applying or casting the resin composition to a support such as a release sheet, and, if necessary, appropriately heating and drying the resultant, or may be formed as a film by subjecting the resin composition to extrusion, press forming, or the like.

In a case where the polyvinyl acetal-based resin is obtained by reacting a raw material polyvinyl acetal-based resin with a modifying agent, as described above, forming may also be made as follows. In other words, a film may also be formed by applying or casting a composition comprising the raw material polyvinyl acetal-based resin, the modifying agent, and, if necessary, other additive such as a plasticizer to be compounded, onto a support such as a release sheet, and thereafter heating the resultant to react the modifying agent with the raw material polyvinyl acetal-based resin.

In a case where the pressure-sensitive adhesive film is a multi-layer film, a resin composition constituting each layer may be provided, and the resin composition constituting each layer may be used to obtain each layer of the multi-layer film. Such a multi-layer structure may be obtained by appropriately stacking such each layer, or may be formed by coextrusion or the like.

The pressure-sensitive adhesive film of the present invention is not particularly limited, can be used in various applications, and is preferably used in various display applications, laminated glass applications, and the like. The display is not particularly limited, and is preferably an in-car display. Examples of the display include a liquid crystal display, an organic EL display or the like, and in particular, the display is preferably a liquid crystal display.

Laminated glass is used in window glass for various conveyances, for example, vehicles such as automobiles and railways, marine vessels, and airplanes, various buildings and plants such as buildings, condominiums, detached houses, halls, and gymnasiums, or working machines for cutting or polishing, and construction machines such as shovels, and cranes, and in particular, is preferably used in applications of vehicles such as automobiles. The pressure-sensitive adhesive film of the present invention is high in impact resistance, hardly causes breakage of a laminate or the like described below, and hardly causes scattering of fragments even if such breakage occurs, and is suitably used in an in-car display or window glass for vehicles.

Herein, laminated glass and a display, to which the pressure-sensitive adhesive film of the present invention is applied, may comprise a laminate described below.

<Laminate>

The pressure-sensitive adhesive film of the present invention is preferably used together with a base material such as an organic material substrate and/or an inorganic material substrate, and used as one portion of a laminate, but not particularly limited thereto. The laminate of the present invention may specifically comprise the pressure-sensitive adhesive film, and a base material selected from the group consisting of at least any of an inorganic material substrate and an organic material substrate. The pressure-sensitive adhesive film is preferably placed so as to adhere to at least any of an inorganic material substrate and an organic material substrate. The pressure-sensitive adhesive film can have a high adhesive force to various resin materials, and thus can be placed on a location adhering to an organic material substrate and thus adhere to the base material at a high adhesive force.

Examples of the organic material substrate include an organic resin plate and a resin film. The organic resin

plate is also called organic glass plate. The organic resin plate is not particularly limited, and examples include various organic plates, for example, a polycarbonate plate, a (meth)acrylic plate such as a polymethyl methacrylate plate, an acrylonitrile-styrene copolymer plate, an acrylonitrile-butadiene-styrene copolymer plate, a polyester plate such as a polyethylene terephthalate plate, a fluororesin plate, a polyvinyl chloride plate, a chlorinated polyvinyl chloride plate, a polypropylene plate, a polystyrene plate, a polysulfone plate, an epoxy resin plate, a phenol resin plate, an unsaturated polyester resin plate, and a polyimide resin plate. The organic resin plate may be appropriately surface-treated.

In particular, a polycarbonate plate is preferable because of being excellent in transparency and impact resistance, a (meth)acrylic plate is preferable because of being high in transparency and excellent in weather resistance and mechanical strength, and in particular, a polycarbonate plate is more preferable.

The thickness of the organic resin plate is not particularly limited, and is preferably 0.1 mm or more, further preferably 0.4 mm or more, and preferably 5.0 mm or less, further preferably 3.0 mm or less.

The resin film is not particularly limited, and examples thereof include (meth)acrylic resin films, polyester resins film such as a polycarbonate film, a polyethylene terephthalate (PET) film and a polyethylene naphthalate (PEN) film, polyolefin resin films such as a polyethylene film and a polypropylene film, cyclic polyolefin (COP) films, a triacetylcellulose (TAC) film, a polyethersulfone (PES) resin film, and polyimide resin films. A surface layer being composed of a hard coating layer or the like including a (meth)acrylic resin may also be provided on a surface of the resin film.

The resin film may be one being composed of a single layer, or may be one including two or more layers which are laminated.

The organic material substrate may be a function film comprising the resin film. Examples of the function film include a polarization film (polarization plate) and a light control film. The configurations of the polarization film and the light control film are as described below.

The thicknesses of the resin film and the function film in the laminate are not particularly limited, and are each preferably 30 $\mu$m or more, further preferably 50 $\mu$m or more, and preferably 500 $\mu$m or less, further preferably 450 $\mu$m or less.

One having a relatively large thickness, having low flexibility, and being not generally foldable is generally called organic resin plate, whereas one having a relatively small thickness and being generally foldable is generally called resin film, and these are not clearly distinguished.

Examples of the inorganic material substrate include an inorganic glass plate. The inorganic glass plate is not particularly limited, and examples thereof include various glass plates such as float plate glass, reinforced glass, colored glass, polished plate glass, figured glass, meshed plate glass, wired plate glass, ultraviolet absorption plate glass, infrared reflection plate glass, infrared absorption plate glass, and green glass. Such inorganic glass may also be, for example, surface-treated. The thickness of the inorganic glass is not particularly limited, and is preferably 0.1 mm or more, further preferably 1.0 mm or more, and preferably 5.0 mm or less, further preferably 3.0 mm or less.

The organic material substrate or the inorganic material substrate may be appropriately provided with an electrode, a sensor, and/or the like. The electrode is constituted by a conductive layer laminated on each of the base materials.

Examples of the sensor include a touch sensor. The touch sensor is a sensor which senses touch input by approach or contact of a finger, a touch pen, or other object to or with each of the base materials, and is constituted by a conductive layer laminated on each of the base materials. The touch sensor senses touch input by an electrical change generated as an electrical change in electrostatic capacity, current, voltage, or the like on the conductive layer due to approach or contact of a finger, a touch pen, or other object to or with each of the base materials.

The conductive layer is not particularly limited, a conventionally known electrode material having transparency can be used without any particular limitation, and examples thereof include an indium tin oxide (ITO) conductive film, a tin oxide conductive film, a zinc oxide conductive film, and a polymeric conductive film.

The organic material substrate (in particular, film), on which a conductive layer such as an electrode or a sensor is laminated, may be provided with the above-mentioned hard coating layer formed on a surface of the base material, the surface being opposite to a surface of the base material, on which the conductive layer is provided. The surface being opposite to a surface of the base material, on which the conductive layer is provided, usually serves as an adhesive surface to the pressure-sensitive adhesive film, and the pressure-sensitive adhesive film of the present invention can also be improved in adhesive force to a surface on which the hard coating layer is provided.

The pressure-sensitive adhesive film of the present invention is preferably used for bonding paired base materials, but not particularly limited thereto. Accordingly, the laminate of the present invention may be specifically one comprising the pressure-sensitive adhesive film and paired base materials, in which the pressure-sensitive adhesive film is placed between the paired base materials. The paired base materials are preferably bonded with the pressure-sensitive adhesive film being interposed.

Both the paired base materials are each preferably glass. The glass may be an inorganic glass plate, or may be an organic glass plate.

One of the paired base materials may be glass and other thereof may be a film. In this case, the glass may be an inorganic glass plate, or may be an organic glass plate. The film may be a resin film, and is preferably a function film

such as a polarization film (polarization plate) or a light control film.

The pressure-sensitive adhesive sheet of the present invention is high in impact resistance, hardly causes breakage of glass, even if used for bonding glass and glass or glass and other member, and hardly causes scattering of fragments and is increased in safety, even if glass is broken.

The laminate preferably comprises paired base materials selected from the group consisting of the inorganic material substrate and the organic material substrate, and an adhesive film placed between the paired base materials and has a multi-layer structure of three or more layers, but not particularly limited thereto.

The adhesive film in such a multi-layer structure may, for example, adhere to both the paired base materials and allow the paired base materials to be bonded with the adhesive film being interposed. In this case, the adhesive film may be the above-mentioned pressure-sensitive adhesive film of the present invention.

The laminate may have a structure where still another interlayer member is placed between the paired base materials, and such a structure may have a multi-layer structure of five or more layers where the adhesive film is placed between each of the base materials and such an interlayer member. When the adhesive film may adhere to each of the base materials and such an interlayer member, each of the base materials and such an interlayer member may be bonded with the adhesive film being interposed. The adhesive film between each of the base materials and such an interlayer member in the above-described multi-layer structure of five or more layers is a resin film, at least one thereof may be the pressure-sensitive adhesive film of the present invention, and both thereof is preferably each the pressure-sensitive adhesive film of the present invention.

The interlayer member may comprise at least any of the inorganic material substrate and the organic material substrate, and at least any of the inorganic material substrate and the organic material substrate may be placed on a location where the pressure-sensitive adhesive film of the present invention adheres.

The above-described laminate may constitute a display, laminated glass, or the like, but not limited thereto. The interlayer member may be a touch panel, a light control element, or the like, as described below, but not limited thereto. The inorganic material substrate or the organic material substrate may constitute one portion of a display element or the like constituting a touch panel, a light control element, or a display.

The laminate of the present invention can be produced by, for example, providing the adhesive film, and compression bonding each member with the provided adhesive film being interposed. For example, the laminate can be produced by stacking the base material, the adhesive film and the base material in the listed order, and compression bonding them. In a case where the interlayer member is provided, the laminate can be produced by stacking the base material, the adhesive film, the interlayer member, the adhesive film, and the base material in the listed order, and compression bonding them.

The compression bonding is not particularly limited, and the compression bonding is preferably performed under heating. Alternatively, temporary adhesion may be performed at relatively low pressure and temperature and then main adhesion may be performed at higher pressure, temperature or pressure and temperature than those in temporary compression bonding.

Next, specific examples of the laminate are described with reference to the drawings. Fig. 1 illustrates a laminate according to a first embodiment. In the first embodiment, a laminate 30A is applied to a touch panel-attached display. The touch panel-attached display is preferably an in-car display. The laminate 30A according to the present embodiment comprises a display element 31, a surface protection panel 32, and a touch panel 33 placed between the display element 31 and the surface protection panel 32, and adhesive films 34A and 34B are placed respectively between the touch panel 33 and the display element 31 and between the surface protection panel 32 and the touch panel 33.

The surface protection panel 32 is preferably any of an organic resin plate or an inorganic glass plate, and is preferably an inorganic glass plate.

Examples of the display element 31 include an organic EL display element and a liquid crystal display element. The display element 31 is preferably provided with a polarization plate (polarization film) on the outermost surface at the front surface side thereof. The outermost surface at the front surface side is the outermost surface at the surface protection panel side, and an opposite side thereof is also referred to as rear surface side.

The polarization plate (polarization film) generally has a configuration where a protective film is provided on each of both surfaces of a light polarizer such as a polyvinyl alcohol resin film. The protective film is constituted from the above-mentioned resin film, and is preferably any of a PET film, a COP film, or a TAC film. Here, a hard coating layer including a (meth)acrylic resin or the like may also be provided as a front surface layer of the base material on a front surface of the protective film. The display element 31 may be provided with the protective film on the outermost surface at the front surface side thereof, even if no polarization plate is provided on a surface at the front surface side thereof. Accordingly, the outermost surface at the front surface side of the display element 31 is constituted by the organic material substrate in any case.

The touch panel 33 may be constituted by any of inorganic glass, an organic resin plate or a resin film to which a touch sensor is attached, and inorganic glass or a resin film to which a touch sensor is attached is preferable.

Two or more of the inorganic glass, the organic resin plate or the resin film may be laminated in the touch panel

33 to provide a multi-layer structure body. Also in such a case, a touch sensor may be attached to any of the inorganic glass, the organic resin plate or the resin film in the touch panel 33.

A protective film being composed of a resin film may be placed on any of the outermost surface at the front surface side or on the outermost surfaceat the rear surface side in the touch panel 33. Accordingly, each adhesive surface of the touch panel 33, to the adhesive films 34A and 34B, is any of the inorganic glass, the organic glass and the resin film.

The adhesive films 34A and 34B respectively adhere to the display element 31 and the touch panel 33, and to the touch panel 33 and the surface protection panel 32, thereby bonding them. Any one of the adhesive films 34A and 34B may be the pressure-sensitive adhesive film of the present invention, and both thereof are each preferably the pressure-sensitive adhesive film of the present invention.

The pressure-sensitive adhesive film of the present invention can have a high adhesive force to not only an inorganic material substrate, but also various resin materials (namely, organic material substrate). Accordingly, adhesive surfaces of the display element 33, the surface protection panel 32, and the touch panel 33, to the adhesive films 34A and 34B, may be each constituted by the organic material substrate, and even in such a case, the display element 31 and the touch panel 33, and the surface protection panel 32 and the touch panel 33 can be each bonded at a high adhesive force.

The pressure-sensitive adhesive film of the present invention is high in impact resistance, and even when a touch panel-attached display is an in-car display, serious damage due to breakage of the touch panel-attached display can be prevented from occurring. Furthermore, moisture and heat resistance is favorable, and thus a laminate can be used under a high-temperature and high-humidity environment for a long period.

Fig. 2 illustrates a laminate according to a second embodiment. The laminate according to the second embodiment is also applied to a display, and a touch panel 33 is omitted in a laminate 30B and thus the laminate 30B comprises a display element 31, a surface protection panel 32, and an adhesive film 34 placed therebetween.

The details of the display element 31 and the surface protection panel 32 are as described in the first embodiment.

In the present embodiment, the adhesive film 34 is composed of the pressure-sensitive adhesive film of the present invention. The adhesive film 34 (pressure-sensitive adhesive film) adheres to the display element 31 and the surface protection panel 32, thereby bonding them, and therefore, the display element 31 and the surface protection panel 32 are bonded at a high adhesive force, as in the first embodiment. The pressure-sensitive adhesive film is high in impact resistance and moisture and heat resistance, and thus, even when the laminate 30B is applied to an in-car display, serious damage due to breakage of the display hardly occurs and use for a long period under a high temperature and a high humidity can also be made.

In the second embodiment, the surface protection panel 32 may be a OGS (one glass solution) panel, and the surface protection panel 32 may be provided with a sensor such as a touch sensor. Accordingly, the surface protection panel 32 may be constituted by inorganic glass or the like to which a sensor is attached.

Fig. 3 illustrates a laminate according to a third embodiment. A laminate 30C according to the third embodiment is applied to laminated glass having a light control function. The laminate 30C according to the present embodiment comprises paired laminated glass members (base materials) 41 and 42, and a light control element 43 placed between the paired laminated glass members 41 and 42, and adhesive films 34A and 34B are placed respectively between one laminated glass member 41 and the light control element 43, and between other laminated glass member 42 and the light control element 43.

The laminated glass members 41 and 42 may be each any of an inorganic glass plate and an organic resin plate, and the details are as described above.

The light control element 43 is preferably a light control film comprising two resin films and a light control layer placed between the two resin films. Accordingly, an adhesive surface of the light control element 43, to each of the adhesive films 34A and 34B, is a resin material.

Examples of such a resin film comprised in the light control element 43 include polyester resin films such as a PET film and a PEN film, (meth)acrylic resin films, TAC films, PES resin films, and polyimide resin films. In particular, a polyester resin film is preferable and in particular a PET film is more preferable, from the viewpoint of handleability or the like.

A conductive layer constituting an electrode is provided on each of surfaces of the two resin films, located at the light control layer side.

The light control layer is changed in visible light transmittance by switching between application and no application of a voltage between such conductive layers provided on the two resin films. The light control layer may be constituted by a liquid crystal layer of a polymer-dispersed liquid crystal (PDLC) or the like. The light control film may be a SPD (Suspended Particle Device) film, an electrochromic film, an electrophoretic film device, or the like. Accordingly, the light control layer may be a SPD layer comprising a resin matrix and a light adjustment suspension dispersed in the resin matrix, or may be an electrochromic material layer. The light control layer may also be an electrophoretic layer or the like comprising an electrophoretic particle and a dispersant for dispersing the electrophoretic particle.

Also in the present embodiment, the adhesive films 34A and 34B adhere respectively to the laminated glass member 41 and the light control element 43, and to the laminated glass member 42 and the light control element 43, thereby bonding them. The adhesive films 34A and 34B are resin films, any one of the films may be the pressure-sensitive adhesive film of the present invention, and both the films are each preferably the pressure-sensitive adhesive film of the present invention.

The pressure-sensitive adhesive film of the present invention has a high adhesive force to not only an inorganic material substrate, but also various resin materials, and thus can allow the laminated glass members 41 and 42 and the polarization element 43 to be bonded at a high adhesive force.

The pressure-sensitive adhesive film of the present invention is high in impact resistance and moisture and heat resistance, and thus, even when the laminated glass according to the third embodiment is used in window glass for vehicles, serious damage due to breakage can be prevented from occurring and use for a long period under a high temperature and a high humidity can also be made.

Fig. 4 illustrates a laminate according to a fourth embodiment. A laminate 30D according to the present embodiment is applied to laminated glass. The laminate 30D according to the present embodiment comprises paired laminated glass members 41 and 42, and an adhesive film 34 placed between the paired laminated glass members 41 and 42, and the adhesive film 34 may be composed of the pressure-sensitive adhesive film of the present invention described above.

The paired laminated glass members 41 and 42 are as described in the third embodiment. When the adhesive film 34 (pressure-sensitive adhesive film) can adhere to both the laminated glass members 41 and 42, thereby bonding them, the laminated glass members 41 and 42 can be bonded at a high adhesive force.

The pressure-sensitive adhesive film of the present invention is high in impact resistance and moisture and heat resistance, and thus, even when the laminated glass according to the fourth embodiment is used in window glass for vehicles, serious damage due to breakage can be prevented from occurring, and use for a long period under a high temperature and a high humidity can also be made.

## Examples

The present invention is described in more detail with reference to Examples, but the present invention is not limited by these Examples at all. The measurement method and the evaluation method of each value of physical properties in the present invention are as described below.

<Weight-average molecular weight (Mw)>

A pressure-sensitive adhesive film was dissolved in tetrahydrofuran at a concentration of 0.05% by weight and the solution was filtered with a syringe filter (manufactured by Merck, Millex-LH 0.45 μm), and thereafter the molecular weight was measured with gel permeation chromatography (manufactured by Waters Corporation, e2690). The weight-average molecular weight (Mw) was calculated by use of a molecular weight calibration curve created with a monodisperse polystyrene standard sample. The column used was Shodex GPC KF-806L (manufactured by Showa Denko K.K.), and the eluent used was tetrahydrofuran.

<Shear storage elastic modulus and maximum peak temperature of tanδ>

Each of the pressure-sensitive adhesive films obtained in Examples and Comparative Examples was cut out to a length of 10 mm and a width of 5 mm, and viscoelasticity was measured with a dynamic viscoelasticity measurement apparatus (manufactured by IT Keisoku Seigyo, Co., Ltd., trade name "DVA-200") in the following measurement conditions, thereby detecting the shear storage elastic modulus (G') at 20°C.

The peak temperature of the loss tangent tanδ obtained from the result of viscoelasticity measurement was read. The peak temperature at the maximum value of tanδ, among peak temperatures in a temperature region of -50 to 150°C, was defined as the maximum peak temperature of tanδ.

(Measurement conditions)

Deformation manner: shear mode, measurement temperature: -50°C to 200°C, rate of temperature rise: 5°C/min, measurement frequency: 1 Hz, strain: 1%

<Amount of modification, degree of acetalization, degree of acetylation, and amount of hydroxyl group>

These were determined by dissolution of a polyvinyl acetal-based resin in a chloroform-d, measurement with

1H-NMR (nuclear magnetic resonance spectrum), and analysis of the molar ratio of each unit.

<Proportion of undissolved component>

1.0 g of each of the pressure-sensitive adhesive films of Examples and Comparative Examples was immersed in 10.0 g of isopropyl alcohol, and shaken by Mix Rotor (product name "Mix Rotor Variable VMR-5R", manufactured by AS ONE Corporation) at 50 rpm and 15°C for 48 hours. Thereafter, an undissolved component was taken out on a 200-mesh wire net, and heated and dried at 110°C for 1 hour. The weight of the undissolved component after drying was defined as W1 and the weight of the pressure-sensitive adhesive film before immersion in isopropyl alcohol was defined as W2, and the proportion of the undissolved component was determined by the following expression.

$$\text{Undissolved component (\% by mass)} = W1/W2 \times 100$$

<Evaluation of moisture and heat resistance>

Each of the pressure-sensitive adhesive films obtained in Examples and Comparative Examples was cut to a size of 11.0 cm length × 11.0 cm width. Two glass plates (clear float glass, 10 cm length × 10 cm width × 2.5 mm thickness) were provided as paired laminated glass members. Each of the pressure-sensitive adhesive films was sandwiched between the two glass plates, and temporary compression bonding was performed at 80°C under application of a pressure of 100 kPa for 10 minutes. Thereafter, the pressure was increased to 1.3 MPa over 10 minutes and the temperature was raised to 140°C over 30 minutes, and thereafter compression bonding was performed under conditions of 1.3 MPa and 140°C for 20 minutes. Next, the temperature was dropped to 32°C over 40 minutes under a pressurizing condition at 1.3 MPa, and furthermore the pressurizing condition was then decreased to 0 MPa over 10 minutes, thereby obtaining laminated glass. Each of the pressure-sensitive adhesive films, protruded from an end portion of the glass, was cut.

The laminated glass obtained was left to still stand under an environment of 23°C and 50% for 2 weeks, thereafter the laminated glass was perpendicularly disposed in a constant temperature and humidity chamber adjusted to 50°C and 95%RH, and retained for 12 weeks. After 12 weeks, the laminated glass was taken out, and each distance to a whitened portion from sides of an outer edge and corners of the laminated glass was measured, and the maximum distance to a whitened portion was used for evaluation according to the following evaluation criteria.

AA: a distance to a whitened portion, of less than 5 mm
A: a distance to a whitened portion, of 5 mm or more and less than 12 mm
B: a distance to a whitened portion, of 12 mm or more

<Evaluation of impact resistance>

Each of the pressure-sensitive adhesive films obtained was cut to a size of 31.0 cm length × 31.0 cm width. Two glass plates (clear float glass, 30.5 cm length × 30.5 cm width × 1.0 mm thickness) were provided as paired laminated glass members. Each of the pressure-sensitive adhesive films was sandwiched between the two glass plates, and temporary compression bonding was performed at 80°C under application of a pressure of 100 kPa for 10 minutes. Thereafter, the pressure was increased to 1.3 MPa over 10 minutes and the temperature was raised to 140°C over 30 minutes, and thereafter compression bonding was performed under conditions of 1.3 MPa and 140°C for 20 minutes. Thereafter, the temperature was dropped to 32°C over 40 minutes under a pressurizing condition at 1.3 MPa, and furthermore the pressurizing condition was then decreased to 0 MPa over 10 minutes, thereby obtaining laminated glass. Each of the pressure-sensitive adhesive films, protruded from an end portion of the glass, was cut.

The surface temperature of the laminated glass obtained was adjusted to 23°C. Next, a steel ball having a mass of 227 g and a diameter of 38 mm was dropped from a height of 5.0 m toward each of six sheets of such laminated glass, onto the center portion of such each laminated glass. First, whether or not the steel ball penetrated through such each laminated glass was confirmed. Such laminated glass through which the steel ball did not penetrate was subjected to measurement of the total weight of fragments peeled from a surface opposite to the surface subjected to an impact, and impact resistance was evaluated by the following evaluation criteria.

A: a total weight of fragments peeled, of less than 10 g
B: a total weight of fragments peeled, of 10 g or more, or penetration of the steel ball through the laminated glass

(Example 1)

[Synthesis of ethylene oxide-modified polyvinyl alcohol]

An allyl ether monomer (1) described in Table 1 was provided. The allyl ether monomer (1) was a compound represented by formula (4-2), $A^1O$ represented an oxyethylene group (EO), and the average number of repeating and the terminal group ($R^1$) were as shown in Table 1.

834 parts by mass of vinyl acetate, 147 parts by mass of the allyl ether monomer (1), and 20 parts by mass of methanol were added into a flask equipped with a stirrer, a thermometer, a dripping funnel and a reflux condenser, the system was purged with nitrogen, and thereafter the temperature was raised to 52°C. While the temperature was kept at 52°C, 0.5 parts by mass of 2,2-azobisisobutyronitrile was added to the system and polymerization was initiated. The polymerization was stopped after 5 hours from initiation of the polymerization. After the unreacted monomer and methanol were removed by heating in an oven, a 40% by mass copolymer solution in methanol was prepared.

7.4 parts by mass of a 3% by mass NaOH solution in methanol was added with stirring of 100 parts by mass of the resulting copolymer solution in methanol at 40°C, and the resultant was well mixed and then left to still stand. After 2 hours, the solidified polymer was pulverized by a pulverizer, washed with methanol and then dried, thereby obtaining a polymer powder (ethylene oxide-modified polyvinyl alcohol).

[Preparation of polyvinyl butyral (PVB 1)]

280 g of the polymer powder obtained was added to 2100 g of pure water, and stirred at a temperature of 90°C for about 2 hours and thus dissolved. The solution was cooled to 40°C, 160 parts by mass of hydrochloric acid having a concentration of 35% by mass and 150 parts by mass of n-butylaldehyde were added thereto, the liquid temperature was decreased to 20°C, the temperature was retained to perform acetalization reaction, and a reaction product was precipitated. Thereafter, the liquid temperature was set to 40°C and retained for 3 hours to complete the reaction, and the resultant was neutralized, washed with water and dried by ordinary methods, thereby obtaining a white powder of a polyvinyl acetal-based resin (PVB 1).

[Production of pressure-sensitive adhesive film]

The polyvinyl acetal-based resin (PVB 1) obtained was subjected to press forming at a temperature of 160°C and a pressure of 20 MPa, thereby obtaining a pressure-sensitive adhesive film having a thickness of 380 μm. The pressure-sensitive adhesive film obtained was subjected to measurement of the maximum peak temperature of tanδ, the shear storage elastic moduli (G') at 20°C and 85°C, and the proportion of the undissolved component, and furthermore evaluation of impact resistance and moisture and heat resistance.

(Examples 2 and 3)

Each resin composition was obtained by mixing a plasticizer (triethylene glycol di(2-ethylhexanoate): 3GO) in an amount described in Table 3, with 100 parts by mass of PVB 1, and the resin composition obtained was used and subjected to press forming by the same method as in Example 1, thereby producing each pressure-sensitive adhesive film. Physical properties of each of the pressure-sensitive adhesive films obtained were measured and evaluated in the same manner as in Example 1.

(Example 4)

PVB 2 was obtained in the same manner as in Example 1 except that polymerization was performed by adding the allyl ether monomer (1) and methanol, thereafter raising the temperature in the system to 60°C, and adding 2,2-azobisisobutyronitrile at 60°C, and PVB 2 was used to produce a pressure-sensitive adhesive film in the same manner as in Example 1. Physical properties of the pressure-sensitive adhesive film obtained were measured and evaluated in the same manner as in Example 1.

(Example 5)

PVB 3 was obtained in the same manner as in Example 1 except that the allyl ether monomer used was changed to an allyl ether monomer (2) and the amounts of vinyl acetate, the allyl ether monomer (2), methanol, and 2,2-azobisisobutyronitrile were respectively changed to 794 parts by mass, 186 parts by mass, 20 parts by mass, and 0.5 parts by mass, and PVB 3 was used to produce a pressure-sensitive adhesive film in the same manner as in Example 1.

Physical properties of the pressure-sensitive adhesive film obtained were measured and evaluated in the same manner as in Example 1.

The allyl ether monomer (2) was a compound represented by formula (4-2), $A^1O$ contained an oxypropylene group (PO) and an oxyethylene group (EO) in a mixed manner, and the average number of repeating and the terminal group ($R^1$) were as shown in Table 1.

(Example 6)

PVB 4 was obtained in the same manner as in Example 1 except that the allyl ether monomer used was changed to an allyl ether monomer (3) and the amounts of vinyl acetate, the allyl ether monomer (3), methanol, and 2,2-azobisisobutyronitrile were respectively changed to 572 parts by mass, 143 parts by mass, 286 parts by mass, and 0.7 parts by mass, and furthermore polymerization was performed by adding the allyl ether monomer (3) and methanol, thereafter raising the temperature in the system to 60°C, and adding 2,2-azobisisobutyronitrile at 60°C, and PVB 4 was used to produce a pressure-sensitive adhesive film in the same manner as in Example 1. Physical properties of the pressure-sensitive adhesive film obtained were measured and evaluated in the same manner as in Example 1.

The allyl ether monomer (3) was a compound represented by formula (4-2), $A^1O$ contained an oxypropylene group (PO) and an oxyethylene group (EO) in a mixed manner, and the average number of repeating and the terminal group ($R^1$) were as shown in Table 1.

(Example 7)

PVB 7 was obtained in the same manner as in Example 1 except that the amount of the allyl ether monomer (1) used was changed to 74 parts by mass, and a pressure-sensitive adhesive film was produced in the same manner as in Example 3 except that PVB 7 was used and the plasticizer was changed to polypropylene glycol having a number-average molecular weight of 1000 ("PPG1000", manufactured by Fujifilm Wako Pure Chemical Corporation, hereinafter, sometimes referred to as "PPG1000"). Physical properties of the pressure-sensitive adhesive film obtained were measured and evaluated in the same manner as in Example 1.

(Example 8)

A pressure-sensitive adhesive film was produced in the same manner as in Example 3 except that PVB 7 was used and the plasticizer was changed to polyoxypropylene diglyceryl ether having a number-average molecular weight of 700 ("UNILUBE DGP-700", manufactured by NOF Corporation, hereinafter, sometimes referred to as "DGP700"). Physical properties of the pressure-sensitive adhesive film obtained were measured and evaluated in the same manner as in Example 1.

(Example 9)

A pressure-sensitive adhesive film was produced in the same manner as in Example 3 except that PVB 7 was used and the plasticizer was changed to polyoxypropylene glyceryl ether having a number-average molecular weight of 1000 ("Uniol TG-1000R", manufactured by NOF Corporation, hereinafter, sometimes referred to as "TG1000R"). Physical properties of the pressure-sensitive adhesive film obtained were measured and evaluated in the same manner as in Example 1.

(Comparative Example 1)

A resin composition was obtained by using PVB 5 being unmodified polyvinyl butyral, as the polyvinyl acetal-based resin used, and mixing 40 parts by mass of a plasticizer (3GO) with 100 parts by mass of PVB 5, and the resin composition obtained was used and subjected to press forming by the same method as in Example 1, thereby obtaining a pressure-sensitive adhesive film. Physical properties of the pressure-sensitive adhesive film obtained were measured and evaluated in the same manner as in Example 1.

(Comparative Example 2)

A resin composition was obtained by using PVB 6 being unmodified polyvinyl butyral, as the polyvinyl acetal-based resin used, and mixing 25 parts by mass of a plasticizer (3GO) with 100 parts by mass of PVB 6, and the resin composition obtained was used and subjected to press forming by the same method as in Example 1, thereby obtaining a pressure-sensitive adhesive film. The pressure-sensitive adhesive film obtained was evaluated in the same manner

as in Example 1.

(Comparative Example 3)

PVB 5 being unmodified polyvinyl butyral was used as the polyvinyl acetal-based resin. A resin composition was obtained by mixing 30 parts by mass of the plasticizer (3GO), 10 parts by mass of a reactive diluent (trimethylolpropane triacrylate: TMPA), and 0.1 parts by mass of benzophenone (BP) as a photopolymerization initiator, with 100 parts by mass of PVB 5, and the resin composition obtained was used and subjected to press forming by the same method as in Example 1, thereby obtaining a pressure-sensitive adhesive film.
The pressure-sensitive adhesive film was irradiated with 4000 mJ/cm$^2$ of light at a wavelength of 365 nm, by use of an ultra-high pressure mercury lamp. After the light irradiation, the shear storage elastic modulus (G'), the maximum peak temperature of tan$\delta$, and the proportion of the undissolved component were measured.
Furthermore, the pressure-sensitive adhesive film produced in Comparative Example 3 was used to produce a laminate as noted with respect to each of the evaluation methods and the laminate was irradiated with 4000 mJ/cm$^2$ of light at a wavelength of 365 nm, by use of an ultra-high pressure mercury lamp, in evaluation of impact resistance and moisture and heat resistance. Thereafter, the impact resistance and the moisture and heat resistance were evaluated.

(Comparative Example 4)

PVB 6 being unmodified polyvinyl butyral was used as the polyvinyl acetal-based resin. A resin composition was obtained by mixing 13 parts by mass of a plasticizer (3GO), 4 parts by mass of a reactive diluent (TMPA), and 0.04 parts by mass of benzophenone as a photopolymerization initiator, with 100 parts by mass of PVB 6, and the resin composition obtained was used and subjected to press forming by the same method as in Example 1, thereby obtaining a pressure-sensitive adhesive film. The pressure-sensitive adhesive film was irradiated with 4000 mJ/cm$^2$ of light at a wavelength of 365 nm, by use of an ultra-high pressure mercury lamp. After the light irradiation, the shear storage elastic modulus (G'), the maximum peak temperature of tan$\delta$, and the proportion of the undissolved component were measured. The impact resistance and the moisture and heat resistance were also evaluated.
Furthermore, the pressure-sensitive adhesive film produced in Comparative Example 4 was used to produce laminated glass as noted with respect to each of the evaluation methods, and the laminated glass was irradiated with 4000 mJ/cm$^2$ of light at a wavelength of 365 nm, by use of an ultra-high pressure mercury lamp, in evaluation of impact resistance and moisture and heat resistance. Thereafter, the impact resistance and the moisture and heat resistance were evaluated.

(Comparative Example 5)

A resin composition was obtained by diluting 100 parts by mass of a (meth)acrylic polymer (Ac1) obtained by polymerizing a monomer at a monomer ratio shown in Table 3, with ethyl acetate, so that the solid content was 45% by mass, and adding 1 part by mass of an isocyanate-based crosslinking agent ("Coronate L-45" manufactured by Nippon Polyurethane Industry Co., Ltd., solid content 45% by mass) on solid content basis. The resin composition obtained was applied to a release treatment surface of a release PET film so that the thickness after drying was 150 $\mu$m, and the resultant was dried at 80°C for 15 minutes, thereby obtaining a pressure-sensitive adhesive film. The pressure-sensitive adhesive film obtained was aged at 23°C for 5 days, and then evaluated in the same manner as in Example 1.

(Comparative Example 6)

The same manner as in Comparative Example 5 was performed except that the (meth)acrylic polymer (Ac1) was changed to a (meth)acrylic polymer (Ac2).
Table 1 below shows allyl ether monomers (1) to (3) used as raw materials in Examples.

Table 1

| Allyl ether monomer | (1) | (2) | (3) |
|---|---|---|---|
| Molecular weight | 1500 | 2000 | 2500 |

(continued)

| Allyl ether monomer | | (1) | (2) | (3) |
|---|---|---|---|---|
| Structure | Type of $A^1O$ | EO | EO | EO |
| | | - | PO | PO |
| | PO/EO (mol) | 100 | 50/50 | 50/50 |
| | Terminal ($R^1$) | Hydrogen atom | Hydrogen atom | Butyl |
| Average number of repeating units | EO | 33 | 19 | 23 |
| | PO | - | 19 | 23 |

Table 2 below shows PVB 1 to PVB 7 used in Examples and Comparative Examples.

[Table 2]

| | | | PVB1 | PVB2 | PVB3 | PVB4 | PVB5 | PVB6 | PVB7 |
|---|---|---|---|---|---|---|---|---|---|
| Polyvinyl acetal resin | Acetyl | Content rate (% by mol) | 3.1 | 1.8 | 1.2 | 1.8 | 1 | 1 | 08 |
| | Hydroxyl group | Content rate (% by mol) | 14.5 | 150 | 23.1 | 218 | 32 | 31 | 20.4 |
| | Acetal | Content rate (% by mol) | 80.5 | 81.7 | 73.7 | 73.7 | 67 | 68 | 77.8 |
| | | Type | Butyral | Butyral | Butyral | Butyral | Butyral | Butyral | Butyral |
| | Alkylene oxide structure | Content rate (% by mol) | 1.9 | 1.5 | 2.0 | 2.7 | - | - | 10 |
| | | Type | EO | EO | EO/PO | EO/PO | - | - | EO |
| | | Terminal ($R^1$) | Hydrogen atom | Hydrogen atom | Hydrogen atom | Butyl | - | - | Hydrogen atom |
| | | Average number of repeating units (EO) | 33 | 33 | 19 | 23 | - | - | 33 |
| | | Average number of repeating units (PO) | - | - | 19 | 23 | - | - | - |

Table 3 below shows each (meth)acrylic polymer used in Comparative Examples.

[Table 3]

| | | | Ac1 | Ac2 |
|---|---|---|---|---|
| (Meth)acrylic polymer | Monomer (% by mass) | n-Butyl acrylate | 65 | 25 |
| | | Methyl methacrylate | 26 | - |
| | | Ethyl acrylate | 4 | - |
| | | Hydroxyethyl acrylate | 1 | - |
| | | 2-Ethylhexyl acrylate | - | 32 |
| | | Isobutyl acrylate | - | 27 |
| | | 4-Hydroxybutyl acrylate | - | 15 |
| | | Acrylic acid | 4 | 1 |

Table 4 shows conditions for carrying out each of Examples and Comparative Examples, physical properties and evaluation results.

[Table 4]

| | | Example 1 | Example 2 | Example 3 | Example 4 | Example 5 | Example 6 | Example 7 | Example 8 | Example 9 | Comparative Example 1 | Comparative Example 2 | Comparative Example 3 | Comparative Example 4 | Comparative Example 5 | Comparative Example 6 |
|---|---|---|---|---|---|---|---|---|---|---|---|---|---|---|---|---|
| Resin | Type | PVB1 | PVB1 | PVB1 | PVB2 | PVB3 | PVB4 | PVB7 | PVB7 | PVB7 | PVB5 | PVB6 | PVB5 | PVB6 | Ac1 | Ac2 |
| | Molecular weight Mw (×10^4) | 26 | 26 | 26 | 25 | 37 | 30 | 16 | 16 | 16 | 36 | 19 | 36 | 19 | 65 | 70 |
| Plasticizer | 3GO (parts by mass*1) | - | 10 | 15 | - | - | - | - | - | - | 40 | 25 | 30 | 13 | - | - |
| | PPG1000 (parts by mass*1) | - | - | - | - | - | - | 16 | - | - | - | - | - | - | - | - |
| | DGP700 (parts by mass*1) | - | - | - | - | - | - | - | 16 | | - | - | - | - | - | - |
| | TG1000R (parts by mass*1) | - | - | - | - | - | - | - | - | 16 | - | - | - | - | - | - |
| Reactive diluent | TMPA (parts by mass*1) | - | - | - | - | - | - | - | - | - | - | - | 10 | 4 | - | - |
| Photopolymerization initiator | BP (parts by mass*2) | - | - | - | - | - | - | - | - | - | - | - | 1 | 1 | - | - |
| Crosslinking agent | Coronate L-45 (parts by mass*1) | - | - | - | - | - | - | - | - | - | - | - | - | - | 1 | 1 |

(continued)

| | | Example 1 | Example 2 | Example 3 | Example 4 | Example 5 | Example 6 | Example 7 | Example 8 | Example 9 | Comparative Example 1 | Comparative Example 2 | Comparative Example 3 | Comparative Example 4 | Comparative Example 5 | Comparative Example 6 |
|---|---|---|---|---|---|---|---|---|---|---|---|---|---|---|---|---|
| Thickness | μm | 380 | 380 | 380 | 380 | 380 | 380 | 380 | 380 | 380 | 380 | 200 | 200 | 200 | 150 | 150 |
| Maximum peak temperature of tanδ | °C | 49.2 | 32.1 | 25.2 | 51.2 | 43.2 | 41.2 | 25.5 | 29.3 | 32.2 | 26 | 31 | 38 After light irradiation | 43 After light irradiation | 5 | -3 |
| G'@20°C | $10^7$Pa | 5.9 | 3.9 | 0.9 | 9.0 | 5.9 | 5.3 | 1.0 | 2.7 | 4.1 | 1.5 | 3.5 | 46 After light irradiation | 2.8 After light irradiation | 0.02 | 0.006 |
| Undissolved component | (% by mass) | 97.1 | 87.9 | 83.5 | 50.2 | 65.3 | 93.1 | 77.2 | 70.6 | 70.7 | 24.1 | 4.0 | 15.3 | 12.1 | 95.1 | 92.2 |
| Impact resistance | | A | A | A | A | A | A | A | A | A | A | A | A | A | B | B |
| Moisture and heat resistance | | A | A | A | A | A | AA | A | A | A | B | B | B | B | AA | AA |

*1 represents "parts by mass" based on 100 parts by mass of thermoplastic resin.
*2 represents "parts by mass" based on 100 parts by mass of reactive diluent.

The pressure-sensitive adhesive film of each of Examples above, in which the predetermined thermoplastic resin was used, thus exhibited a maximum peak temperature of tanδ, falling within a predetermined range, and a high shear storage elastic modulus at 20°C and also had a high proportion of the undissolved component, and therefore could exhibit both impact resistance and moisture and heat resistance which were favorable.

On the contrary, that of each of Comparative Examples 1 to 4, although exhibited a maximum peak temperature of tanδ, falling within a predetermined range, and a high shear storage elastic modulus at 20°C, had a low proportion of the undissolved component, and thus could not exhibit favorable moisture and heat resistance. That of each of Comparative Examples 5 and 6 exhibited a low shear storage elastic modulus (G') at 20°C, and thus was insufficient in impact resistance.

Reference Signs List

30A, 30B, 30C, 30D laminate
31 display element
32 surface protection panel
34, 34A, 34B adhesive film (pressure-sensitive adhesive film)
32 second layer
41, 42 laminated glass member
43 light control element (light control film)

## Claims

1. A pressure-sensitive adhesive film comprising a thermoplastic resin,
a maximum peak temperature of tanδ being 0°C or more and 52°C or less, a shear storage elastic modulus at 20°C being $3 \times 10^5$ Pa or more, and a proportion of an undissolved component in dissolution of 1.0 g of the pressure-sensitive adhesive film in 10 g of isopropyl alcohol being 35% by mass or more and 100% by mass or less.

2. The pressure-sensitive adhesive film according to claim 1, comprising no plasticizer, or comprising less than 20 parts by weight of a plasticizer based on 100 parts by weight of the thermoplastic resin.

3. The pressure-sensitive adhesive film according to claim 1 or 2, wherein the thermoplastic resin is a polyvinyl acetal-based resin.

4. The pressure-sensitive adhesive film according to claim 3, wherein the polyvinyl acetal-based resin has a polyalkylene oxide structure represented by the following formula (1):

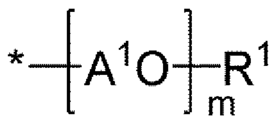
(1)

wherein $A^1O$ represents an oxyalkylene group having 2 to 6 carbon atoms, and m represents an average number of repeating and is 4 to 200; $R^1$ represents an alkyl group having 1 to 8 carbon atoms, or a hydrogen atom, in which the oxyalkylene group is optionally adopted singly or as a mixture of two or more kinds thereof; and * represents a position of binding with other group.

5. The pressure-sensitive adhesive film according to claim 4, wherein the polyvinyl acetal-based resin contains the polyalkylene oxide structure at a proportion of 0.1% by mol or more and 10% by mol or less.

6. The pressure-sensitive adhesive film according to claim 4 or 5, wherein the polyalkylene oxide structure contains at least any of an oxyethylene group or an oxypropylene group.

7. The pressure-sensitive adhesive film according to claim 6, wherein the polyalkylene oxide structure contains both an oxyethylene group and an oxypropylene group, and such groups have a random structure.

8. The pressure-sensitive adhesive film according to any one of claims 4 to 7, wherein a terminal of the polyalkylene oxide structure is an alkyl group.

9. The pressure-sensitive adhesive film according to any one of claims 3 to 8, wherein a degree of acetalization of the polyvinyl acetal-based resin is 60% by mol or more.

10. A laminate comprising the pressure-sensitive adhesive film according to any one of claims 1 to 9, and paired base materials, wherein the pressure-sensitive adhesive film is placed between the paired base materials.

11. The laminate according to claim 10, wherein each of the paired base materials is glass.

12. The laminate according to claim 10, wherein one of the paired base materials is glass and other thereof is any of a light control film and a polarization film.

13. A liquid crystal display comprising the laminate according to any one of claims 10 to 12.

14. A laminated glass comprising the laminate according to any one of claims 10 to 12.

Fig. 1

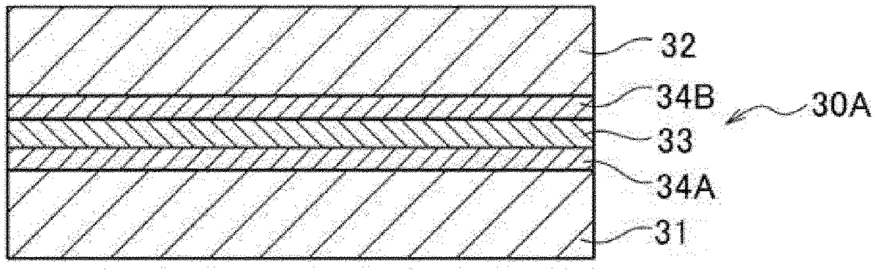


Fig. 2

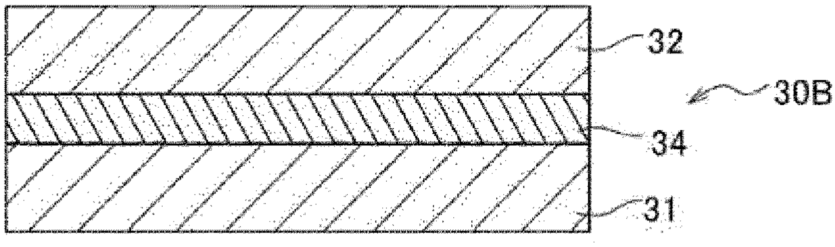


Fig. 3

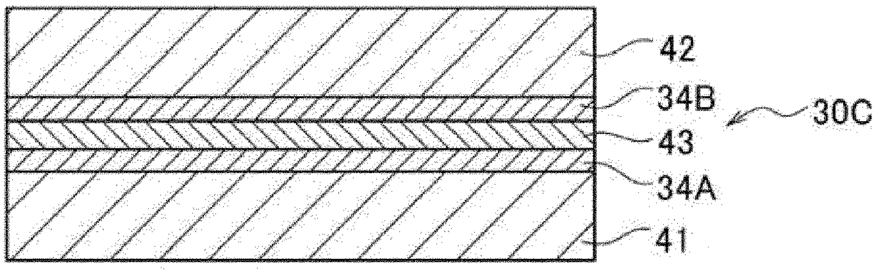


Fig. 4

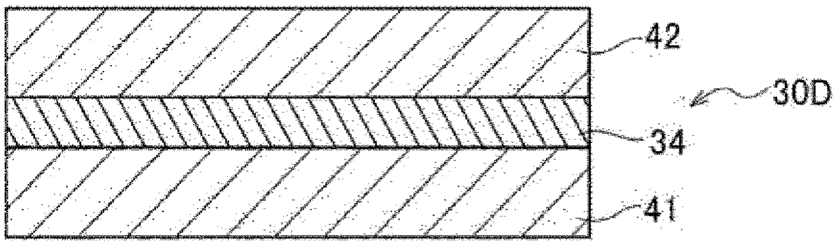

## INTERNATIONAL SEARCH REPORT

International application No. **PCT/JP2022/024191**

**A. CLASSIFICATION OF SUBJECT MATTER**

***B32B 17/10***(2006.01)i; ***B32B 27/00***(2006.01)i; ***B32B 27/30***(2006.01)i; ***C03C 27/12***(2006.01)i; ***C09J 129/14***(2006.01)i; ***C09J 201/00***(2006.01)i; ***C09J 7/38***(2018.01)i; ***G02B 5/30***(2006.01)i; ***G02F 1/13***(2006.01)i; ***G02F 1/1335***(2006.01)i
FI: C09J7/38; C09J201/00; C09J129/14; B32B27/00 M; G02B5/30; C03C27/12 D; B32B27/30 102; B32B17/10; G02F1/1335 510; G02F1/13 505

According to International Patent Classification (IPC) or to both national classification and IPC

**B. FIELDS SEARCHED**

Minimum documentation searched (classification system followed by classification symbols)

B32B17/10; B32B27/00; B32B27/30; C03C27/12; C09J129/14; C09J201/00; C09J7/38; G02B5/30; G02F1/13; G02F1/1335

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2019-65166 A (SEKISUI CHEMICAL CO., LTD.) 25 April 2019 (2019-04-25) claims, paragraphs [0001], [0015], [0016], [0038], examples 1-4 | 1-6, 8 |
| Y | | 8, 10-14 |
| A | | 7 |
| X | JP 2015-25042 A (SEKISUI CHEMICAL CO., LTD.) 05 February 2015 (2015-02-05) claims, paragraphs [0001], [0021]-[0030], [0036], [0044], examples 1-4 | 1-6, 9 |
| Y | | 8, 10-14 |
| A | | 7 |
| Y | WO 2014/148360 A1 (KURARAY CO., LTD.) 25 September 2014 (2014-09-25) claims, paragraphs [0002], [0073], [0074], examples | 10-14 |
| Y | WO 2016/158694 A1 (SEKISUI CHEMICAL CO., LTD.) 06 October 2016 (2016-10-06) claims, examples | 10-14 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **05 August 2022** | **06 September 2022** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

**INTERNATIONAL SEARCH REPORT**

International application No.
**PCT/JP2022/024191**

**C. DOCUMENTS CONSIDERED TO BE RELEVANT**

| Category* | Citation of document, with indication, where appropriate, of the relevant passages | Relevant to claim No. |
|---|---|---|
| Y | JP 2017-149956 A (SEKISUI CHEMICAL CO., LTD.) 31 August 2017 (2017-08-31) claims, examples | 10-14 |
| Y | WO 2017/061545 A1 (SEKISUI CHEMICAL CO., LTD.) 13 April 2017 (2017-04-13) claims, examples | 10-14 |

Form PCT/ISA/210 (second sheet) (January 2015)

**INTERNATIONAL SEARCH REPORT**
**Information on patent family members**

International application No.
**PCT/JP2022/024191**

| Patent document cited in search report | Publication date (day/month/year) | Patent family member(s) | Publication date (day/month/year) |
|---|---|---|---|
| JP 2019-65166 A | 25 April 2019 | (Family: none) | |
| JP 2015-25042 A | 05 February 2015 | (Family: none) | |
| WO 2014/148360 A1 | 25 September 2014 | US 2016/0053102 A1<br>claims, paragraphs [0002], [0075], [0076], examples<br>EP 2977404 A1<br>KR 10-2015-0135426 A<br>TW 201443132 A | |
| WO 2016/158694 A1 | 06 October 2016 | US 2018/0001600 A1<br>claims, examples<br>EP 3279158 A1<br>CN 106795049 A<br>AU 2016242391 A<br>CA 2981859 A<br>KR 10-2017-0134955 A<br>TW 201641572 A | |
| JP 2017-149956 A | 31 August 2017 | US 2018/0304590 A1<br>claims, examples<br>EP 3360940 A1<br>TW 201726794 A<br>CN 107709487 A<br>KR 10-2018-0068948 A | |
| WO 2017/061545 A1 | 13 April 2017 | US 2018/0304590 A1<br>claims, examples<br>EP 3360940 A1<br>TW 201726794 A<br>CN 107709487 A<br>KR 10-2018-0068948 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 6046811 B
- JP 6116772 B